(19) Europäisches Patentamt
European Patent Office
Office européen des brevets

(11) **EP 3 690 483 B1**

## (12) EUROPEAN PATENT SPECIFICATION

(45) Date of publication and mention
of the grant of the patent:
**03.05.2023 Bulletin 2023/18**

(21) Application number: **19155199.3**

(22) Date of filing: **04.02.2019**

(51) International Patent Classification (IPC):
**G01S 13/88** *(2006.01)*    **H01Q 21/00** *(2006.01)*
**G01S 13/42** *(2006.01)*    **G01S 7/282** *(2006.01)*
**G01S 7/35** *(2006.01)*    **G01S 13/00** *(2006.01)*

(52) Cooperative Patent Classification (CPC):
**G01S 13/88; G01S 7/282; G01S 7/35;**
**G01S 13/003; G01S 13/42;** G01S 13/885;
G01S 13/931

(54) **A METHOD FOR SYNTHESIS OF ANTENNA ARRAY LAYOUTS OR SELECTION OF WAVEFORM IN A SET OF MUTUALLY INCOHERENT APERTURES FOR RADAR AND RADIO-FREQUENCY APPLICATIONS**

VERFAHREN ZUR SYNTHESE VON ANTENNENANORDNUNGSLAYOUTS ODER ZUR AUSWAHL DER WELLENFORM IN EINEM SATZ VON ZUEINANDER INKOHÄRENTEN APERTUREN FÜR RADAR- UND HOCHFREQUENZANWENDUNGEN

PROCÉDÉ DE SYNTHÈSE D'AGENCEMENTS DE RÉSEAU D'ANTENNES OU DE SÉLECTION DE FORME D'ONDE DANS UN ENSEMBLE D'OUVERTURES MUTUELLEMENT INCOHÉRENTES POUR APPLICATIONS RADAR ET DE RADIOFRÉQUENCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.08.2020 Bulletin 2020/32**

(73) Proprietor: **Fraunhofer-Gesellschaft zur
Förderung
der angewandten Forschung e.V.
80686 München (DE)**

(72) Inventors:
• **Mateos Nunez, David
53177 Bonn (DE)**
• **Gonzalez Huici, Maria Antonia
53123 Bonn (DE)**
• **Simoni, Renato
53111 Bonn (DE)**
• **Correas Serrano, Aitor
53115 Bonn (DE)**

(74) Representative: **Gagel, Roland
Patentanwaltskanzlei
Dr. Roland Gagel
Landsberger Strasse 480 a
81241 München (DE)**

(56) References cited:
• **TOHIDI EHSAN ET AL: "Sparse Antenna and Pulse Placement for Colocated MIMO Radar", IEEE TRANSACTIONS ON SIGNAL PROCESSING, IEEE SERVICE CENTER, NEW YORK, NY, US, vol. 67, no. 3, 1 February 2019 (2019-02-01), pages 579-593, XP011701681, ISSN: 1053-587X, DOI: 10.1109/TSP.2018.2881656 [retrieved on 2018-12-17]**
• **SIDDHARTH JOSHI ET AL: "Sensor Selection via Convex Optimization", IEEE TRANSACTIONS ON SIGNAL PROCESSING, IEEE SERVICE CENTER, NEW YORK, NY, US, vol. 47, no. 2, 1 February 2009 (2009-02-01), pages 451-462, XP011237455, ISSN: 1053-587X**
• **A.F. MOLISCH ET AL: "MIMO systems with antenna selection - an overview", RADIO AND WIRELESS CONFERENCE, 2003. RAWCON '03. PROCEEDINGS AUG. 10-13, 2003, 1 January 2003 (2003-01-01), pages 167-170, XP055603507, DOI: 10.1109/RAWCON.2003.1227919 ISBN: 978-0-7803-7829-2**
• **RADMARD M ET AL: "Receivers' placement of a MIMO radar in the presence of mountains", 2014 INTERNATIONAL RADAR CONFERENCE, IEEE, 13 October 2014 (2014-10-13), pages 1-6, XP032746372, DOI: 10.1109/RADAR.2014.7060299 [retrieved on 2015-03-12]**

- ROSSI MARCO ET AL: "Spatial Compressive Sensing for MIMO Radar", IEEE TRANSACTIONS ON SIGNAL PROCESSING, IEEE SERVICE CENTER, NEW YORK, NY, US, vol. 62, no. 2, 1 January 2014 (2014-01-01), pages 419-430, XP011536432, ISSN: 1053-587X, DOI: 10.1109/TSP.2013.2289875 [retrieved on 2013-12-31]
- INNA IVASHKO ET AL: "Radar network topology optimization for joint target position and velocity estimation", SIGNAL PROCESSING., vol. 130, 1 January 2017 (2017-01-01), pages 279-288, XP055603518, NL ISSN: 0165-1684, DOI: 10.1016/j.sigpro.2016.07.010
- QIAN HE ET AL: "Target Velocity Estimation and Antenna Placement for MIMO Radar With Widely Separated Antennas", IEEE JOURNAL OF SELECTED TOPICS IN SIGNAL PROCESSING, IEEE, US, vol. 4, no. 1, 1 February 2010 (2010-02-01), pages 79-100, XP011300241, ISSN: 1932-4553
- MA BOTAO ET AL: "A Joint Scheme of Antenna Selection and Power Allocation for Localization in MIMO Radar Sensor Networks", IEEE COMMUNICATIONS LETTERS, IEEE SERVICE CENTER, PISCATAWAY, NJ, US, vol. 18, no. 12, 1 December 2014 (2014-12-01), pages 2225-2228, XP011567271, ISSN: 1089-7798, DOI: 10.1109/LCOMM.2014.2365206 [retrieved on 2014-12-08]
- CHUN-YANG CHEN ET AL: "MIMO Radar Ambiguity Properties and Optimization Using Frequency-Hopping Waveforms", IEEE TRANSACTIONS ON SIGNAL PROCESSING, IEEE SERVICE CENTER, NEW YORK, NY, US, vol. 55, no. 12, 1 December 2008 (2008-12-01), pages 5926-5936, XP011233258, ISSN: 1053-587X
- BLUNT SHANNON ET AL: "Polyphase-coded FM (PCFM) radar waveforms, part II: optimization", IEEE TRANSACTIONS ON AEROSPACE AND ELECTRONIC SYSTEMS, IEEE SERVICE CENTER, PISCATAWAY, NJ, US, vol. 50, no. 3, 1 July 2014 (2014-07-01), pages 2230-2241, XP011567359, ISSN: 0018-9251, DOI: 10.1109/TAES.2014.130362 [retrieved on 2014-11-24]
- LI HUI ET AL: "Orthogonal frequency division multiplexing linear frequency modulation signal design with optimised pulse compression property of spatial synthesised signals", IET RADAR SONAR NAVIGATION, THE INSTITUTION OF ENGINEERING AND TECHNOLOGY, UK, vol. 10, no. 7, 1 August 2016 (2016-08-01), pages 1319-1326, XP006057777, ISSN: 1751-8784, DOI: 10.1049/IET-RSN.2015.0642

**Description**

FIELD OF THE INVENTION

The present invention relates to the design of optimal antenna arrays for radar and radio-frequency applications comprised of mutually incoherent apertures that enable high angular resolution and localization estimation with unpreceded flexibility in usage of available space, and without need to synchronize widely separated transmit and/or receive antenna elements, avoiding the phase errors associated to lack of synchrony, deformations, and vibrations, and making unnecessary techniques such as auto-focusing or blind calibration between apertures that would require several snapshots, while maintaining a combined effective array factor with low sidelobes, all these characteristics suitable for applications to automotive radar for advance driver assistance systems (ADAS), ground-penetrating radar, synthetic aperture radar, medical imaging, navigation systems, and communications. The present invention also relates to a method for selection of waveform in a set of mutually incoherent apertures for radar and radio-frequency applications.

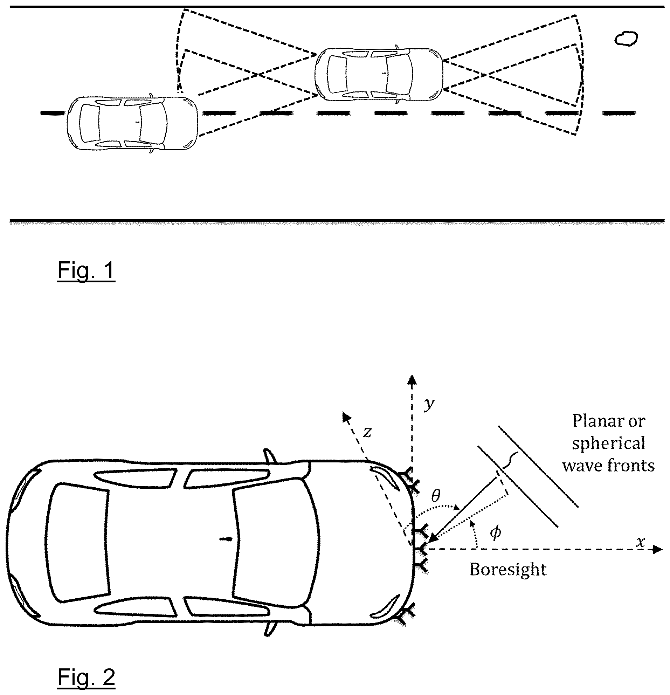

High-resolution direction of arrival (DoA) estimation has crucial importance in most radar and communication systems. In highly automated driving, functions such as lane change assist and collision avoidance systems require high angular resolution in both forward and rear-facing radars to discern the lane of other vehicles and obstacles at long distances, especially at high speeds, cf. Fig. 1. The necessary aperture size and number of transmit and receive elements increase the required space and complexity of the hardware to achieve synchronization, particularly at high frequencies, which poses a challenge on the overall design and raises the cost. The disclosed invention presents a design method for synthesis of antenna element positions of mutually incoherent apertures, which relaxes the constraints on required physical space and synchronization associated to prior art on design of coherent apertures, while ensuring a satisfactory performance of angular estimation.

PRIOR ART ON SYNTHESIS OF ELEMENT POSITIONS OF ANTENNA ARRAYS

The problem of optimizing antenna element positions to achieve a desired beam-pattern, to our knowledge has been addressed only in the case of a single coherent aperture.

PRELIMINARIES: MODEL FOR RADIATION PATTERN (Prior-Art)

The physical model used in prior art for optimization of antenna element positions considers a geometric arrangement of antenna elements that by coherent transmission produces a so-called radiation or beam-pattern, referring to the power directionality when certain complex amplitudes are applied to the radiating antennas through a beam-former network. By reciprocity of transmission and reception, this model also represents the estimation method of beamforming or Delay-and-Sum wherein the powered received in any hypothetical direction is quantified for a given direction of the emitting or reflecting object. Formally, in the far-field approximation, i.e., planar wave fronts, the power as a function of direction for a linear array of omnidirectional antenna elements (transmitters or receivers) at positions $[y_1, ..., y_M] \in \mathbb{R}^M$ (we present the three dimensional case next) is given by the so called array factor

$$F(u) = \sum_{i=1}^{M} b_i e^{ik_0 u\, y_i},  \qquad (1)$$

where $b_i \in \mathbb{C}$ is the amplitude and phase applied to the antenna element $i$, and we denote by $k_0 := 2\pi/\lambda_0$ the wavenumber with the wavelength $\lambda_0 > 0$ (i.e., assuming a narrowband signal with carrier wavelength centered at $\lambda_0$), and $u = \sin(\phi) \in [-1,1]$ is the electronic angle or DoA with respect to boresight. Fig. 2 shows the model of planar wave fronts for azimuth and elevation angle with respect to boresight. In the next section we discuss the model for the antenna pattern, which in (1) is assumed omni-directional.

For an arrangement of antenna element positions in 3-dimensional space, $[p_1, ..., p_M] \in \mathbb{R}^{3 \times M}$ (cf. Fig. 2), the array factor is

$$F(u) = \sum_{i=1}^{M} b_i e^{ik_0 \hat{n}^T p_i}, \qquad (2)$$

where

$$\hat{n} = [u, v, w]^T = [\cos(\phi)\sin(\theta), \sin(\phi)\sin(\theta), \cos(\theta)]^T \in \mathbb{R}^{3\times1} \qquad (3)$$

is the normal vector to the unit sphere at spherical coordinates $(\phi, \theta)$, and $p_i = [x_i, y_i, z_i]^T \in \mathbb{R}^{3\times1}$ is the position of the antenna element i.

PRELIMINARIES: AMBIGUITY FUNCTION AND SIDELOBE LEVEL (Prior-Art)

To generalize the concept of array factor to more general sampling schemes in signal processing, it is convenient to define a notion of ambiguity function [1]. Consider a spatial or temporal signal model given by $a(\xi) \in \mathbb{C}^M$, with generic parameter vector $\xi \in \mathbb{R}^q$. Note that above $\& = u = \sin(\phi)$, or, in the case of azimuth and elevation using electronic angles,, $\& = \hat{n} = [u,v,w]$ cf. (3). The choice of parametrization is not restrictive; $a(\xi)$ can also be parametrized in terms of angular coordinates with $\& = [\phi, \theta]$.

The ambiguity function can be defined in terms of the scalar product between the spatial or temporal signals $a(\xi)$, $a(\xi')$, with parameter vectors $\xi, \xi' \in \mathbb{R}^q$, as follows[1]:

$$AF(\xi, \xi') := |a(\xi)^H a(\xi')|, \qquad (4)$$

which is proportional to the cosine similarity between the vectors. (In many cases, the norm $\|a(\xi)\|$ is constant across vector parameters and otherwise it can be advantageous to previously normalize the signals.) The ambiguity between a hypothesis $\xi'$ and the signal's true parameter $\&$, with $\xi \neq \xi'$, is produced by a high value of $AF(\xi, \xi')$. The peak values in a 2q-dimensional space are called the sidelobes that are desired to be lower than the mainlobe centered at the true hypothesis $\xi = \xi'$. For any such notion of ambiguity function, the maximum sidelobe, or sidelobe level (SLL), can be written as

$$f_{SLL}([p_1, \dots, p_M]; c) = \max_{\substack{\xi, \xi' \in [\xi_{\min}, \xi_{\max}] \\ \|\xi - \xi'\|_p > c(\xi)}} AF(\xi, \xi'). \qquad (5)$$

[1] Note that when $a(\xi)$ is a function instead of a finite vector, the scalar product in the corresponding Hilbert space is expressed as an integral.

Here we emphasize the dependence on the positions of the antenna elements (or, in further extensions, waveform frequencies or temporal sampling instants), and $[\xi_{\min}, \xi_{\max}] \subset \mathbb{R}^q$ is the rectangular domain, or field-of-view, with entry-wise lower and upper bounds. Here $\|.\|_p$ is the p-norm, for suitable $p \in [1, \infty]$, and the function $c = c(\xi) > 0$ is the caliber, which is a design parameter commonly used [2] [3] [4] (and normally taken as constant) to set a limit for the mainlobe width (MLW), such that outside of the 2q-dimensional band, the peaks of $AF(\xi, \xi')$ are quantified as sidelobes.

We make the following remarks with special emphasis on array design, some of them may not be readily available in the literature, especially for design in multi-dimensional problems, and are considered preliminaries:

(i) The evaluation of metric (5) is itself a nonlinear and non-concave maximization for a candidate array. The sidelobes represent local maxima. Global optimization methods to solve this problem are necessary when $\&$ is multi-dimensional and when sidelobes are sharp.

(ii) Some parametrizations of the signals produce a dependency of the mainlobe width on the target parameters $\&$, and therefore we consider a caliber $c \equiv c(\xi)$ with an analogous dependency to reflect said physical property. For instance, the mainlobe width for angular estimation in terms of $\xi = [\phi, \theta]$ depends on the apparent aperture of the array from the direction of the target. (In the case of a linear array perpendicular to boresight, the apparent aperture as a function of azimuth $\phi$ is scaled as $\dfrac{1}{\cos(\phi)}$, reflecting the fact that in natural angles the apparent aperture is 0 at $\phi = 90°$.)

(iii) In multi-dimensional problems, another choice is the norm used to quantify the distance $\|\xi - \xi'\|_p$, or, alternatively, the distance can be measured and constrained entry-wise if the feasible or desired resolution is different in each parameter. Alternatively, the axes can be scaled or a scaling factor can be applied in $\|\rho_\xi \odot (\xi - \xi')\|_p$ for $\rho_\xi \in \mathbb{R}^q_{>0}$ (where Q denotes entry-wise multiplication).

(iv) The dependence on amplitude tapering weights (also called windowing or apodization) can be included in the description of the signal model $a(\xi)$, i.e., $\tilde{a}(\xi) = \sqrt{w} \odot a(\xi)$, allowing to optimize the weight vector $w \in \mathbb{R}^M_{\geq 0}$ along with the antenna positions [3]. In this case the AF (4) can be written as

$$\widetilde{AF}(\xi, \xi') = \frac{AF(\xi, \xi')}{\sum_{i=1}^n w_i} = \frac{\left|a(\xi)^H\left(w \odot a(\xi')\right)\right|}{\sum_{i=1}^n w_i}, \tag{6}$$

where we divide by $\sum_{i=1}^n w_i$ because without loss of generality the weights can be re-defined so that $\sum_{i=1}^n w_i = 1$. Consequently, the SLL $f_{SLL}([p_1, ..., p_M]; c) \equiv f_{SLL}([p_1, ..., p_m], w ; c)$ also depends on the weights. This metric that quantifies the sidelobes can be complemented with additional cost terms, e.g., on noise equivalent bandwidth [5].

(v) The antenna pattern for all the antennas $AP(\xi) \in \mathbb{C}^M$ can be similarly included in the signal model. For this, we can define the antenna pattern with orientation $APO(\xi) \in \mathbb{C}^M$ which measures the power at a given direction & (transmitted or received) in the specified common reference frame according to the orientation of the antenna. Thus, this function can explicitly depend on a vector of further parameters $\mu$ such as the pointing direction of the antenna, etc., $APO(\xi) \equiv APO(\xi;\mu)$. The array signal model can then be defined as

$$\tilde{a}(\xi) = APO(\xi) \odot a(\xi). \tag{7}$$

(vi) In the case of MIMO signals after match filtering, c.f. [6], the antenna pattern is incorporated using (7) as follows, $a_{\text{Virt}}(\xi) = \tilde{a}_{Tx}(\xi) \otimes \tilde{a}_{Rx}(\xi)$, which is equivalent to

$$a_{\text{Virt}}(\xi) = APO_{\text{Virt}} \odot \left(a_{Tx}(\xi) \otimes a_{Rx}(\xi)\right),$$

where $APO_{\text{Virt}}(\xi) := APO_{Tx}(\xi) \otimes APO_{Rx}(\xi)$ is the Kronecker product of antenna patterns with orientation for pairs of Tx and Rx elements.

The FoV or domain for the parameters $[\xi_{\min}, \xi_{\max}]$ in the specified reference frame is computed as the union of the supports of the entries in $APO(\xi)$, or $APO_{\text{Virt}}(\xi)$ in the MIMO case, thresholded at a desired level of power decay $P_{\text{decay}}$:

$$[\xi_{\min}, \xi_{\max}] = \bigcup_{i=1}^M \{\xi \in \mathbb{R}^q : [AP_{\text{Virt}}(\xi)]_i > P_{\text{decay}}\}. \tag{8}$$

Note that if the orientations and antenna patterns of individual antennas $[AP_{\text{Virt}}(\xi)]_i$ are the same, then the union is unnecessary.

(vii) An additional penalty term on the MLW is often included in the far-field case, cf. [7], CN105426578B. (Note that the caliber induces a limit on the width of the mainlobe, beyond which the mainlobe is penalized as a SLL, but it is not a penalty on the MLW when the MLW is thinner than the caliber.)

PRELIMINARIES: ANTENNA POSITION SYNTHESIS

The optimization of the element positions for models (1) or (2) to minimize the sidelobes for a given caliber function, is given by the nonlinear optimization problem,

$$\min_{[p_1 \cdots p_M] \in \mathcal{S}} f_{\text{Array}}([p_1, \dots, p_M]; c), \tag{9}$$

where $f_{\text{Array}}$ collects the penalties on the sidelobe level $f_{SLL}$ in (5), and possibly a penalty on the MLW $f_{MLW}$, and other penalty terms to include soft constraints,

$$f_{\text{Array}}([p_1, \dots, p_M]; c) := f_{SLL}([p_1, \dots, p_M]; c) + f_{MLW}([p_1, \dots, p_M]) + \cdots, \tag{10}$$

and $\mathcal{S} \subset \mathbb{R}^{3 \times M}$ represents the domain for the antenna positions, including spatial and minimum separation constraints to avoid electromagnetic coupling. There are several reasons why this problem is nonlinear: i) the objective function (5) is already a nonlinear optimization problem itself, and ii) the domain for the available antenna positions can be further parametrized, for each antenna $i$, as $p_i = \gamma^i(\rho)$ by a nonlinear function $\gamma^i : S_\sigma \to \mathbb{R}^3$ , which can parametrize a curve or a surface, where $S_\sigma$ is the domain of the parameter $\rho$ (e.g., in the case of conformal array design [8]).

The optimization above implicitly constrains system cost and power. In particular, the number of antennas and the available space are given. In transmission, it is desirable to use equal power at the radiating antenna elements, $|b_i|$ = 1, to increase power efficiency and simplify the operation of the amplifiers. For reception, there is no inconvenient in using digital weighting at the available channels and these can be included as optimization variables as observed above. The phases of $b_i$ can be used for steering in transmission both in phased arrays and possibly in MIMO arrays but the scenario of steering in transmission is not addressed in this invention, which is focused on optimization of antenna element positions and tapering in post-processing for incoherent apertures.

Next, we describe some properties of the far-field and near-field models and the relationship with other sampling schemes and waveform design, and review information theoretic metrics and statistical bounds on DoA estimation performance that simultaneously trade-off the SLL and the MLW.

PRELIMINARIES: FAR-FIELD SIGNAL MODEL (Prior-Art)

To relate the generic ambiguity function in (4) and the array factor (1), we define the far-field steering vector for the linear array $[y_1, \dots, y_M] \in \mathbb{R}^M$ as

$$a^{FF}(u) := \left[ e^{ik_0 u y_1}, \cdots, e^{ik_0 u y_M} \right]^T \in \mathbb{C}^M, \tag{11}$$

and for 3-dimensional arrays,

$$a^{FF}(\hat{n}) := \left[ e^{ik_0 \hat{n}^T p_1}, \cdots, e^{ik_0 \hat{n}^T p_M} \right]^T \in \mathbb{C}^M, \tag{12}$$

where we recall that $[p_1 \cdots p_M] \in \mathbb{R}^{3 \times M}$ contains the spatial coordinates of each of the M antennas.
The AF for model (11) verifies, for $\Delta u := u - u'$, that

$$AF(u, u') = |1^T a^{FF}(u' - u)| = |1^T a^{FF}(u - u')| = \left| \sum_{i=1}^{M} e^{ik_0 \Delta u\, y_i} \right|, \tag{13}$$

and corresponds to $|F(\Delta u)|$ in (1) by selecting $b = [b_1, \cdots, b_M]$ equal to $a^{FF}(u')$. That is, the *radiation pattern,* i.e., the power received at spatial frequency or direction $u$ when the beam is steered at direction $u'$, coincides with the ambiguity function $AF(u,u')$. The symmetry in model (13), $AF(u,u') = |F(\Delta u)| = |F(-\Delta u)|$, implies that the optimization in (5) is required only

over the variable $\Delta u := u' - u \in [c, 2\sin(\phi_{\max})]$. Therefore, in this case, it can be assumed without loss of generality that $u' = 0$, simplifying the search of sidelobes to a one-dimensional problem, where we recall that $c > 0$ is the caliber introduced above, that is,

$$f_{SLL}([p_1, \ldots, p_M]; c) = \max_{\Delta u \in [c, 2\sin(\phi_{\max})]} |F(\Delta u)|. \tag{14}$$

This is a formulation commonly used for array design, cf. [2] [3] [4]. As mentioned above, it is common to add a complementary penalty term to optimize the MLW, cf. [7], CN105426578B.

In cases where the array has specific structures, some quantities can be expressed analytically, e.g., for symmetric linear arrays US3877033A, the array factor can be expressed as a product in terms of antenna positions, which allows to create nulls at desired angles and control the sidelobe level, and for circular ring arrays, EP2949002A1 (see also WO2014114993A1), it is possible to derive some optimality conditions for the rings' radii.

The far-field model has the advantage of fast processing using the Fast Fourier Transform (FFT) and other beamformers like MUSIC and ESPRIT. For design, using the far-field is not incompatible with using the angular variables $\phi, \theta$ instead of the spatial frequencies $[u, v, w]$ to parametrize the array factor. Indeed, the design of the arrays can be performed using the parametrization in terms of $[\phi, \theta]$, even if it fails to satisfy the symmetry relation in (13) which in any case is unnecessary for (5).

Another consequence of the far-field model is that the MIMO case for orthogonal waveforms can be written as the SIMO case in terms of the positions of the virtual Tx-Rx pairs (e.g., after matched-filtering, c.f. [6]), given by the Kronecker sum

$$p_{Tx} \oplus p_{Rx} := \begin{bmatrix} p_{Tx_1} + p_{Rx_1} & p_{Tx_1} + p_{Rx_2} \cdots p_{Tx_1} + p_{Rx_n} \cdots p_{Tx_m} + p_{Rx_n} \end{bmatrix}$$
$$\in \mathbb{R}^{3 \times m_{Tx} m_{Rx}}, \tag{15}$$

which is often called virtual array. Naturally, the degrees of freedom for the optimization are the Tx and Rx antenna positions.

PRELIMINARIES: NEAR-FIELD SIGNAL MODEL (Prior-Art)

The near-field model for DoA estimation is a more realistic in some applications like medical imaging and also for automotive radar using arrays of certain aperture. Here we review the geometric aspect of this model that concerns the path of the signals from transmitters to object and back to receivers. For further reference, we refer to works on Taylor approximations and studies of model mismatch [9]. For the purpose of this disclosure, it suffices to introduce the exact geometric model. Following [10], the near-field steering vector for receive antennas $p_m = [x_m, y_m, z_m]^T$ and an emitter object at distance $r > 0$ is given by

$$[a_{Rx}^{NF}(\hat{n}, r)]_m = \exp\left(-i\frac{2\pi}{\lambda} r \sqrt{1 - \frac{2}{r}\hat{n}^T p_m + \frac{p_m^T p_m}{r^2}}\right), \tag{16}$$

where we recall that $\hat{n}$ is the normal vector to the unit sphere at spherical coordinates $(\phi, \theta)$ defined in (3).

By the reciprocity of transmission and reception, the corresponding near-field steering vector for transmission $a_{Tx}^{NF}(\hat{n}, r)$ is defined similarly. The MIMO signal model for orthogonal waveforms after match-filtering can be written in terms of the virtual steering vector

$$a_{\text{Virt}}^{NF}(\hat{n}, r) := a_{Tx}^{NF}(\hat{n}, r) \otimes a_{Rx}^{NF}(\hat{n}, r).$$

Note that the dependency of the near-field virtual steering vector on antenna positions is not through the virtual array in (15). Nonetheless, we can still refer to such coherent sets of Tx and Rx elements as a virtual aperture, which will be convenient when we define multiple such mutually incoherent apertures. Also, the range $r$ is a parameter that has a different treatment depending on the application and for design purposes it can be assumed in a certain interval.

PRELIMINARIES: RELATIONSHIP WITH WAVEFORM DESIGN (Prior-Art)

Several data models in radar signal processing are usually transformed into frequency estimation of a sum of complex tones [11]. Analogous models include (a) DoA estimation under the far-field model using the electronic angles, and (b) Doppler estimation, where instead of having dependence on the antenna locations, there is a dependence on the carrier frequency and on the pulse repetition interval or non-uniform transmission times of the pulses. Another equivalent model is range estimation using a waveform with time-multiplexed or simultaneous frequencies, illustrated next. This waveform finds applications in ground penetrating radar [12], and SFCW for automotive radar [13] [14]. For simplicity, consider a transmitter and a receiver at the same location. The transmitter transmits a set of sinusoids with frequencies $f_i = \frac{c_{\text{Light}}}{\lambda_i}$, $i = 1,...,M$, either in a sequence or simultaneously, where $c_{\text{Light}}$ is the speed of light. The echo signal from a given source at range $r$, assuming here negligible Doppler, results in a standard form [15] for each of the frequencies, given by

$$a(r) = \left[ e^{i2k_1 r}, \cdots, e^{i2k_m r} \right]^T \in \mathbb{C}^M, \qquad\qquad (17)$$

where $k_i = 2\pi/\lambda_i$ is the wavenumber associated to carrier wavelength $\lambda_i$. Note the similarity with the far-field signal model for DoA estimation in (11), wherein the antenna positions are replaced by frequencies. The ambiguity function for range estimation in this simple case is then analogous to (13),

$$AF(r,r') = |a(r)^H a(r')| = |1^T a(r' - r)| = \left| \sum_{i=1}^{M} e^{i2\Delta r \, k_i} \right| =: AF_{PC}(\Delta r), \qquad (18)$$

where we use the short-hand notation $AF_{PC}(\Delta r)$ for pulse-compression or ambiguity function for range estimation, that satisfies $AF_{PC}(\Delta r) = AF_{PC}(-\Delta r)$, and $r, r' \in [r_{\min}, r_{\max}]$. The notion of sidelobe level is defined similarly to (14) as

$$f_{SLL}([k_1, ..., k_M]; c) = \max_{\Delta r \in [c, r_{\max} - r_{\min}]} AF_{PC}(\Delta r),$$

where the caliber $c > 0$ can be chosen according to a desired resolution. It is common in radar and radio-frequency applications to refer to the coherent sampling domain, being the antenna array layout (spatial domain), or available bandwidth (frequency domain), as available *aperture.* We will use this notation also to refer to sets of apertures that are mutually incoherent, spatially or in frequency.

PRELIMINARIES: OTHER OPTIMIZATION METRICS FOR COHERENT APERTURES (Prior-Art)

Optimization metrics that have been applied for array design alternative to the SLL and MLW of the ambiguity function, include the Bayesian Cramer-Rao Bound (BCRB), [16], WO2009140998A1, the Weiss-Weinstein Bound (WWB) [17] [18], and the Ziv-Zakai bound (ZZB) [19]. These have the following disadvantages: The BCRB is an asymptotic predictor of performance in the limit of high SNR or many snapshots, namely, it is related to the MLW and does not consider sidelobe ambiguity [7] and therefore it has to be combined with other metrics. On the other hand, metrics like the WWB or the ZZB are tighter bounds on the mean-squared-error (MSE) and are shown to capture big errors due to sidelobe ambiguity but they have drawbacks shared by all such bounds on the MSE, including the numerical evaluation of the Bayesian MSE itself [20]: (i) By definition they average the errors, which implies that worst-case scenarios due to high sidelobes are averaged with small contributions due to low sidelobes or due to other high sidelobes that are very close to the mainlobe. For this reason, these metrics favor array factors with sharp high sidelobes that produce errors with low probability or very close to the mainlobe, undesirable if the intention is to penalize all false alarms equally or to improve performance in the case of two scatterers. (ii) It is hard or impossible to derive analytic expressions of these bounds for more realistic signal models for angular estimation other than far-field, and numerical calculation of associated integrals without analytic formula is computationally expensive [20].

SUMMARY OF PRIOR ART ON ARRAY SYNTHESIS FOR COHERENT APERTURES (Prior-Art)

Model (2) concerns a single coherent aperture because the signals of the different antennas are combined with known phases. In the scenario of interest of highfrequency radar, including but not limited to 77GHz, the literature on array design considers the optimization of antenna element positions only in said case of coherent apertures [2] [3] [4]. Work [21] was the first to consider this problem, and more recently the available computational power has popularized nonlinear global optimization methods such as genetic algorithms, particle swarm optimization, and simulated annealing [22]. The optimization has also been performed for non-planar arrays, including conformal arrays [8]. In the case of prior patent applications, again only the case of coherent arrays is studied, as we outline next with some exemplary works.

US3877033A describes a synthesis method of non-uniform arrays with uniform amplitudes (following the seminal work by the author in [21]) with a much lower sidelobe-level of the radiation pattern than the uniform counterparts, based on a factorization of the array factor, normally given by a sum of cosines for symmetric arrays, in terms of a multiplication of cosines in terms of the element positions, which yields a sequential and computationally fast method for optimal placement of an arbitrary number of antenna elements.

WO2009140998A1 describes a method for thinning a given array (i.e., removing elements from an initially uniform array) using as optimization metric a combination of the angular estimation performance and the sidelobe level. The former is quantified in terms of the MSE or a lower bound thereof such as the CRB.

EP2949002A1 (see also WO2014114993A1) describes a method for joint optimization of element positions and dimensions for planar sparse arrays, especially circular ring arrays. The optimization method makes some assumptions about the structure of the array to employ certain analytic optimality conditions.

CN105426578B presents an optimization method for planar arrays for MIMO Synthetic Aperture Radar. The optimization of SLL and MLW is performed using genetic algorithms.

E. Tohidi et al., "Sparse Antenna and Pulse Placement for Colocated MIMO Radar," in IEEE Transactions on Signal Processing, vol. 67, no. 3, pp. 579-593 describes antenna placement for MIMO radar.

These works assume coherency between all the antenna elements. The disadvantages of coherent apertures are the following:

i. Require a larger physical aperture to increase resolution;
ii. Require synchronization, which entails hardware complexity and cost, particularly at high frequencies, and thus less mounting flexibility;
iii. Are subject to phase errors due to fabrication inaccuracies, and also deformations and vibrations during operation;
iv. The sidelobe level can be high if a big separation between apertures is imposed by design constraints, particularly in vehicles.

As noted above, the main assumption in all previous work is that the signals from all the antennas are combined with the intended phase in transmission or, reciprocally, that all phase differences can be measured in reception. In contrast, in the method according to the present invention, a model is considered where a random initial phase is accounted for between subsets of antenna elements. We refer to this model as having mutually incoherent apertures.

PRIOR ART ON PROCESSING WITH MUTUALLY INCOHERENT APERTURES (Prior-Art)

In previous section we have argued that prior art has not addressed a model of mutually incoherent apertures *for design* and/or *optimization.* Here we introduce the model for mutually incoherent apertures and review prior art that has addressed this model for *processing* signals. Consider a one-snapshot signal model after any required digital signal processing. In radar, the digital signal processing can optionally include match-filtering for range-Doppler processing or, typically in automotive radar, 2D-FFT. The following signal model can include spatiotemporal sampling and is not restricted to angle estimation, thus broadening the applicability of the disclosed invention for design of optimal non-uniform sampling and illumination with stepped frequencies under incoherency. Namely, the measurements are grouped for each coherent aperture, and can refer to time, frequency, or spatial samples.

In the case of a single coherent MIMO aperture, there is only one virtual combination of *sets* of Tx and Rx elements. In the case of multiple (mutually incoherent) MIMO apertures, we define the *virtual apertures* as the combinations of sets of Tx elements and Rx elements in each of the apertures. The signals associated to these virtual apertures are mutually incoherent. It is also possible that one aperture does not contain Tx or Rx elements. The measurement model for each virtual aperture $l \in \{1, ...,L\}$ is defined as follows. For a sum of $K$ sources, each with parameter vector $\xi_k \in \mathbb{R}^q$ and signal model $a^{(l)}(\xi_k) \in \mathbb{C}^{m_l}$ with $m_l$ samples, the measurement or data model is given by

$$y^{(l)} = \sum_{k=1}^{K} s_k^{(l)} a^{(l)}(\xi_k) + w^{(l)}, \qquad (19)$$

where $s_k^{(l)} \in \mathbb{C}$ is the complex amplitude of source k, accounting for path propagation loss, target RCS, processing gain of previous filtering (e.g., matched-filtering) and random initial phase associated to coherent block *l*. The noise after previous filtering is denoted by $w^{(l)} \in \mathbb{C}^{m_l}$ and its distribution does not play a role unless explicitly mentioned in embodiment 3 where we introduce the likelihood under Gaussian models. That is, we consider the deterministic ambiguity function associated to the geometry of the samples. The signal models for each of the blocks, $\{ a^{(l)}(\xi_k) \in \mathbb{C}^{m_l} \}$, are expressed in a common-reference frame, and can correspond to angle of arrival estimation under far-field or near-field models for narrow-band sources, Doppler estimation with non-uniform pulse repetition intervals [23], and range estimation [23] [11].

Methods for processing signals from incoherent apertures for model (19) have been developed, including techniques for the following scenarios: Synthetic Aperture Radar (SAR) or inverse SAR (iSAR), where auto-focusing [24] and blind calibration [25] techniques are used in post-processing to compensate for possibly unknown translation and orientation of the platform or the target; Distributed radar where incoherent processing via group sparsity has been used for delay estimation [26], iSAR [27], or tracking [28], as well as in passive radar networks [29]. In other scenarios like Radio-astronomy, synchronization is possible at low frequencies. In these works there is no mention to design and optimization principles of incoherent apertures.

We also note that a previous invention by the authors, filed as EP18179827, describes a system and a method for height and azimuth estimation using group-sparse reconstruction with mutually incoherent apertures and multi-path models. However, this invention does not disclose a method for synthesis of the antenna element positions, which is crucial for the phenomenon of sidelobe cancellation while maintaining a thin mainlobe.

PRIOR ART ON FREQUENCY/TIME APERTURES (Prior-Art)

In a previous section we have reviewed the equivalence between mathematical models for DoA estimation (under far-field signals) and Doppler and delay estimation, which allows to extend the novel disclosed techniques for design of mutually incoherent apertures to the case of waveform design also under mutually incoherent bandwidths. The principles for such design have not been presented earlier in the case of multiple mutually incoherent apertures.

In the case of coherent time/frequency apertures, [15] presents a radar system architecture based on Compressed Sensing for high range resolution [30], and ISAR, where only specific frequencies are generated, thus using the spectrum more efficiently and reducing the rate of sampling data. With similar principles, [31] explains a method for measurement acquisition and delay estimation based on Doppler focusing for increasing SNR and guaranteeing sparsity in fast-time domain (i.e., range domain). This work estimates the delay using Compressed Sensing with a set of Fourier coefficients, which can be obtained via direct sampling [32], or sampling different spectral bands using a sub-Nyquist measurement-acquisition process denominated Xampling, and then matching the Fourier coefficients digitally [33]. Other design techniques for sub-sampling a signal include multicoset sampling [34], which is amenable to CS techniques [35]. This model has been used for the optimization of spatially variant apodization (tapering) assuming coherency [36].

Works related to cognitive waveform design include [37], which presents a characterization of optimal pulse repetition frequency and channel selection based on optimization of the WWB in a given domain or field of view of the parameter of interest, e.g., Doppler frequency and DoA. Waveform optimization has been studied in numerous works [38] in relation to avoiding certain occupied bands of the spectrum while optimizing filter performance, but the optimization principles considered do not employ ambiguity functions or similar metrics under incoherency between multiple apertures.

In the case of optimization of pulse/chirp transmission times, the following works and inventions are the closest: US7142153B2 presents hardware and a method based on stepped-frequency pulses for range-Doppler estimation. This invention does not consider design optimization principles.

US9448302B2 (Method for operating a MIMO radar), related to [39] [40], presents a time-multiplexed schema where transmission instants are optimized according to a mathematical expression based on the Cramer-Rao Bound for joint estimation of DoA and Doppler assuming a coherent group of antennas. This accomplishes a reduction of the effect of movement and consequent Doppler frequency shift on DoA estimation accuracy when all the antennas of a MIMO system are used with time-domain multiplexing. These works however do not describe the design principles of the disclosed invention for two reasons: a) they do not consider incoherency between transmission sequences among multiple transmitters, and b) they do not consider the effect of sidelobes because the CRB is only related to the mainlobe width.

Multiple works have studied the problem of optimization of switching patterns, or pulse transmission times, in TDM MIMO using ambiguity functions [41], [42] or statistical performance metrics that capture sidelobe level (as aforementioned [37]). Recent work [43] considers non-uniform arrays and proposes a model for optimizing the sidelobes according to a spatio-temporal ambiguity function, thus increasing the maximum non-ambiguous Doppler frequency.

However, again these works do not consider mutually incoherent apertures or the phenomenon of mutual sidelobe cancellation between them.

In summary, none of the previous approaches have focused on design principles for incoherent apertures, either spatially, for optimal placement of antenna elements, or in frequency, for the selection of frequency bands, or in time, for the optimization of pulse transmission times in slow-time mutually incoherent transmission sequences. None of them enhance the properties of the effective combined ambiguity function or matched-filter response in said case of mutually incoherent apertures, and there is no mention of principles for effective mutual cancellation of sidelobes in the parameter of interest, DoA, range or velocity, under random initial phases between apertures in space, frequency or time.

It is thus an object of the present invention to provide a method for synthesis of antenna array layouts and/or selection of waveform in a set of mutually incoherent apertures for radar and radio-frequency applications which allows a cancellation of sidelobes at an optimal usage of space and number of elements, and/or bandwidth and measurement acquisition time.

## SUMMARY OF THE INVENTION

The object of the invention is achieved with the method according to claims 1, 8 and 12. Advantageous embodiments of the method are subject matter of the dependent claims or are described in the subsequent formulations for carrying out the invention.

In the proposed method, a synthesis of antenna array layouts is described based on mutually incoherent apertures in terms of an optimization problem for given constraints on the number of mutually incoherent apertures, the total number of Tx and Rx elements, the maximum size of each aperture, and the field-of-view. Other design hyper-parameters for near-field models may include the set of ranges over which the metric is averaged. The design method includes the provision of a metric with ambiguity functions formulated for Block Orthogonal Matching Pursuit (BOMP), Tropp's Exact Recovery Condition (ERC), and Maximum Likelihood, for a signal model that includes random initial phases between apertures, and the selection of transmit and receive antenna locations according to said metric based on optimization of the corresponding ambiguity functions. The optimization is performed such that a sidelobe level (and/or features dependent on the sidelobe level) associated to said ambiguity functions over a number of dimensions corresponding to one or several parameters of interest, including azimuth and/or elevation, is minimized.

The proposed method for selection of waveform accordingly includes the provision of a metric with ambiguity functions based on a signal model that includes random initial phases between apertures, and the selection of frequencies and/or pulse transmission times according to said metric based on optimization of the ambiguity functions such that a sidelobe level (and/or features dependent on the sidelobe level) associated to said ambiguity functions over a number of dimensions corresponding to one or several parameters of interest, including range and/or Doppler, is minimized.

The principle of the invention for design of array layouts of mutually incoherent apertures is the following. By exploiting the disclosed optimal designs, group-sparse reconstruction algorithms and other beamformers exhibit an improved estimation performance because the design method allows to optimize the resolution of the mutually incoherent apertures by using more effectively the available space without the need to keep a low sidelobe level in each individual aperture thanks to the mutual cancellation of sidelobes.

The benefits of the proposed method include

I. Unnecessary synchronization among widely distributed antenna elements. Transmission and reception synchronization is a challenge, particularly at high frequencies (e.g., 77GHz in automotive radar), which adds complexity and cost to the system. The disclosed design method can achieve comparable or better resolution and sidelobe level than a bigger and costlier coherent aperture by combining two or more smaller incoherent apertures, contrary to existing perception that to increase resolution for a given sidelobe level is necessary to have bigger apertures.

II. Flexible use of space. A benefit of avoiding big coherent apertures is that our designs can be more flexibly mounted in a vehicle, in a distributed fashion, using the available space without need for cables and systems to avoid or compensate vibrations.

III. Elimination of phase errors introduced by deformations and vibrations of separated apertures. The smaller each coherent aperture, the smaller the effect of deformations, dilations and vibrations, which introduce phase errors that are significant at high frequencies, e.g., 77GHz in automotive radar. Note that the distance between incoherent apertures does not need to be known with wavelength accuracy because inter-aperture phase differences are not employed.

IV. Multi-functionalities and array constellations. Our method allows to flexibly optimize sets of apertures with different and specialized requirements in terms of field-of-view or range of operation.

The proposed method and exemplary array layouts are particularly suited, given the above benefits, for design of a *constellation* of incoherent apertures for automotive radar, optimized for short, medium and long range functionalities and possibly with full 360° coverage to enable at low cost all advance driving assistant systems, from lane change assist, to collision warning and emergency braking. Nonetheless, it can also find applications in airborne and satellite radar, synthetic aperture radar, remote sensing, communications, and navigation systems.

BRIEF DESCRIPTION OF THE DRAWINGS

The proposed design procedure is described in detail in the following by way of detailed mathematical descriptions of the optimization metrics, design variables, and constraints in connection with the drawings, wherein:

Fig. 1 depicts a traffic scenario where a vehicle has to change to the adjacent lane because of the presence of an obstacle but a second vehicle behind is using that lane to overtake the first vehicle.

Fig. 2 depicts a schematic exemplary configuration of antenna array apertures along with a 3-dimensional reference frame representing the azimuth and elevation angles of a planar front wave impinging the arrays.

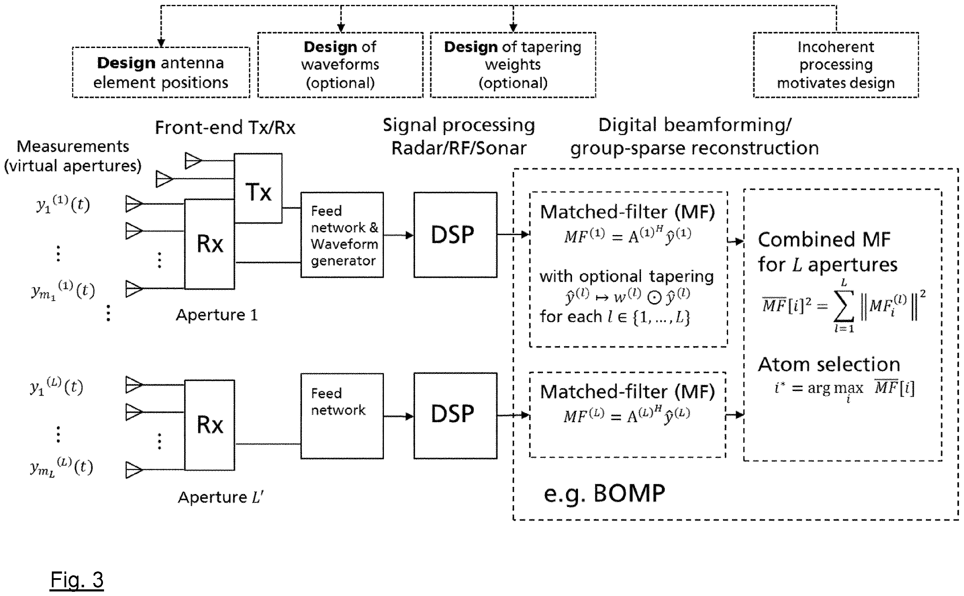

Fig. 3 depicts a block diagram of the basic architecture of an exemplary radar system including the front-end with the optimal antenna array design for multiple mutually incoherent apertures, and the processing chain exemplifying the processing of the signals using group-sparse reconstruction. The upper part arrows illustrate that the synthesis of antenna positions and digital tapering result from optimizing a metric that enhances the processing of signals from the mutually incoherent apertures. DSP stands for digital signal processing. Note that the number of coherent (but mutually incoherent) physical apertures, $L'$ (with Tx and Rx elements), is different than the total number of virtual apertures, $L$, which result from combinations of coherent sets of Tx and Rx elements.

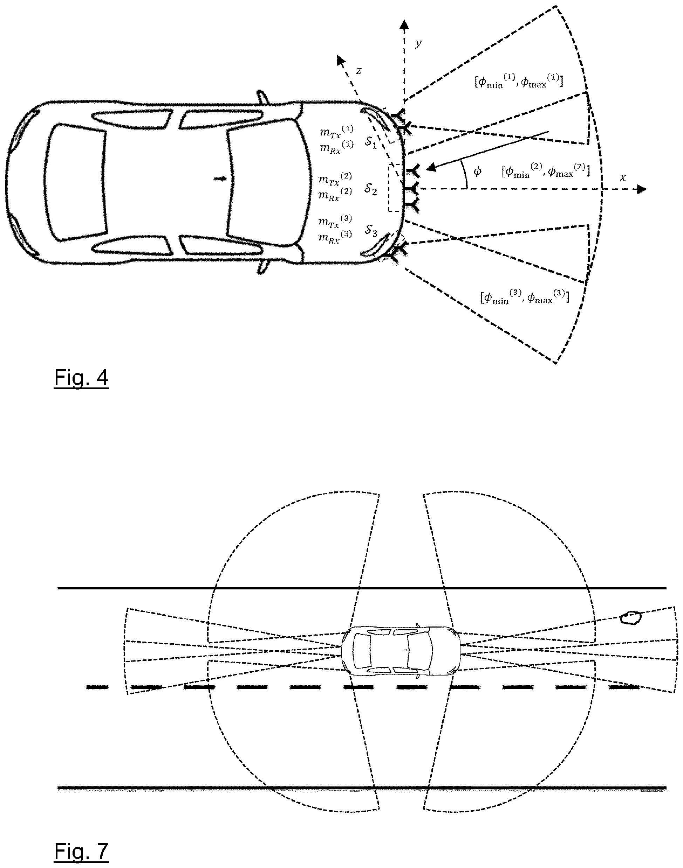

Fig. 4 depicts a schematic description of the design choices that need to be specified for the optimization of antenna element positions, including i) number of mutually incoherent apertures (e.g., one in the center of the bumper and two on the sides, but the possible configurations are not limited to these), ii) the available space for each aperture, iii) the number of Tx and Rx elements, and iv) the field-of-views.

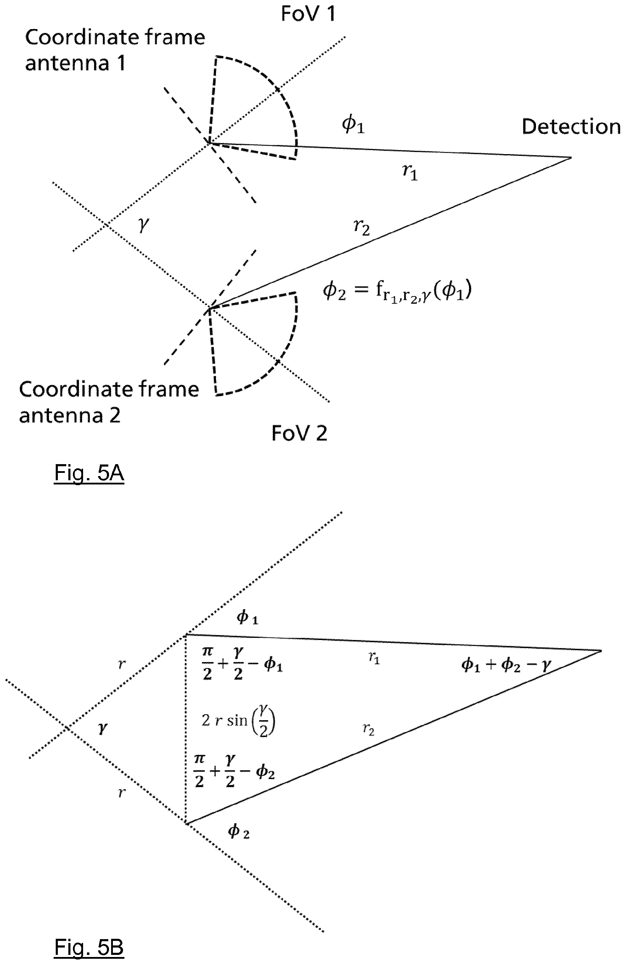

Fig. 5 depicts the coordinate transformation of azimuth angle between two reference frames associated to two antenna arrays or apertures with different orientations. It additionally shows that a target may not be in the FoV of both antenna arrays or apertures.

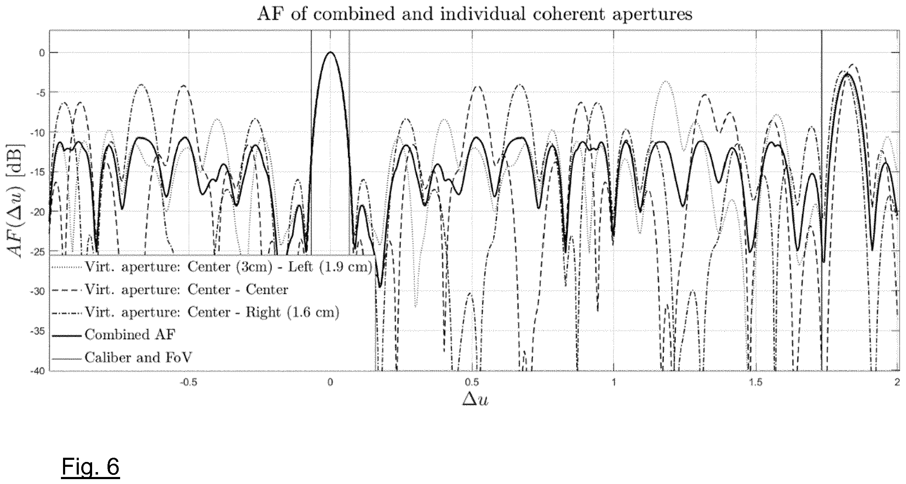

Fig. 6 illustrates an example of the result of mutual sidelobe cancellation between the mutually incoherent virtual apertures. It shows the combined and individual ambiguity functions of an instance configuration with three mutually incoherent linear apertures, a central 3x4 MIMO aperture and two apertures on the sides with 4 Rx elements each, optimized jointly over a FoV of ±60°. Since there are transmitters only in the central aperture, the mutually incoherent virtual apertures are then defined by the Tx,Rx-MIMO subarrays (Center-Left), (Center-Center), and (Center-Right). The final sizes after the optimization of the subarrays is indicated in the legend: 1.9cm for Rx sub-array on the left, 3cm and 2.3cm for the Tx and Rx sub-arrays on the center, and 1.6cm for the Rx sub-array on the right. (The actual antenna positions are not provided for this example.) The vertical lines represent the caliber and the limit of the FoV, thus delimiting the region where the effective combined SLL is minimized. The legend also shows the resulting length of each aperture.

Fig. 7 illustrates an example for multiple radar array apertures in a vehicle with an exemplary plant view of the overlapping FoVs in azimuth. The radius of each cone illustrates the possibly different detection ranges of the antennas (not at scale).

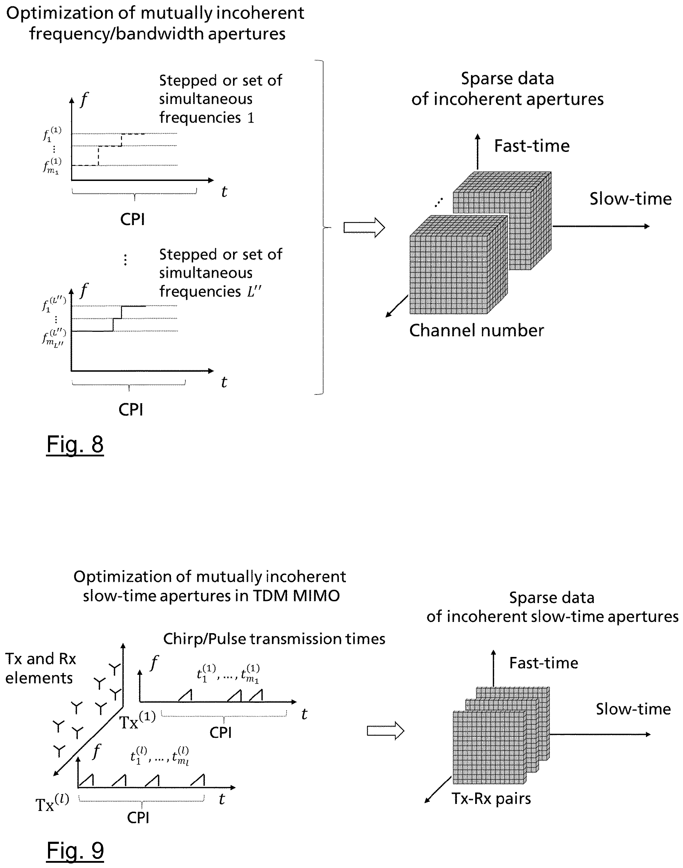

Fig. 8 illustrates a scenario of waveforms for Tx elements in mutually incoherent apertures. Each transmitter has available a bandwidth for selection of SFCWs. In each coherent bandwidth, a stepped frequency waveform or set of simultaneous frequencies are selected according to the optimization proposed.

Fig. 9 illustrates the optimization of transmission times for non-simultaneous chirps for two generic mutually incoherent transmitters over their respective coherent processing intervals, and also depicts the associated data cube. The diagram shows an arbitrary sparse antenna configuration and an exemplary sequence of FMCW chirps in frequency-time axes, emphasizing the design of the transmission times.

DETAILED DESCRIPTION OF THE INVENTION

Next we describe the method for the synthesis of antenna element positions under mutually incoherent apertures.

We start with some preliminaries on group-sparse reconstruction.

PRELIMINARIES: GROUP-SPARSE RECONSTRUCTION FOR INCOHERENT APERTURES (Prior-Art)

The estimation of the parameter vectors $\{\xi_1, \xi_2, \ldots, \xi_K\} \subset \mathbb{R}^q$ for each of the $K$ targets for the general signal model (19) can be formulated as a group-sparse reconstruction problem, which entails fitting the measurements of each virtual aperture by a sparse linear super-position of single-source predictions selected from an over-complete dictionary of hypotheses. Formally, for each virtual aperture $l \in \{1, \ldots, L\}$, the representation of the signal takes the form

$$y^{(l)} \approx A^{(l)} x^{(l)}, \qquad\qquad (20)$$

where $A^{(l)} \in \mathbb{C}^{m_l \times N}$ contains as columns the array measurement model evaluated in a grid, $\{\xi_1, \ldots, \xi_N\}$, e.g., under a lexicographic order, in the relevant domain [ $\xi^{(l)}_{\min}, \xi^{(l)}_{\max}$ ] (e.g., field of view),

$$A^{(l)} := \left[ a^{(l)}(\xi_1) \cdots a^{(l)}(\xi_N) \right]. \qquad\qquad (21)$$

This matrix is sometimes called dictionary. Note that if a given hypothesis $\xi_{j_0}$ does not belong to [ $\xi^{(l)}_{\min}, \xi^{(l)}_{\max}$ ] for some virtual aperture $l$, then we can define $a^{(l)}(\xi_{j_0}) = 0$. The coupling constraint between mutually incoherent virtual apertures is induced by a group-sparsity constraint $\|x\|_{2,1} < \varepsilon$, for suitable $\varepsilon > 0$ in terms of the *block-norm*

$$\|x\|_{2,1} := \sum_{i=1}^{N} \|x[i]\|_2,$$

where $x[i] := \left[ x_i^{(1)}, \ldots, x_i^{(L)} \right] \in \mathbb{C}^L$ collects the reconstruction coefficients for hypothesis $i$ across all the virtual apertures. The estimates of the parameters can be computed by thresholding

$$\bar{x}(i) := \sum_{l=1}^{L} \left| x_i^{(l)} \right|.$$

The quantity $\bar{x} \in \mathbb{R}^N$ can be interpreted as the amplitude map for the parameter of interest over the N-grid.

Regarding the above model, we make two observations: (i) the measurement fidelity constraints (20) do not couple the phase differences between mutually incoherent virtual apertures because these are assumed arbitrary due to lack of synchronization, vibrations, etc. In particular, the sparse reconstruction coefficients $x = \left[ x^{(1)^T} \cdots x^{(L)^T} \right] \in \mathbb{C}^{NL}$ correspond to the complex amplitudes of each hypothetical source/component that fit the signal from each virtual aperture of Tx and Rx elements, including the arbitrary initial phase. (ii) The support of the sparse reconstruction coefficients for each sensor $x^{(l)}$ is promoted to be the same through the block or group-sparsity constraint $\|x\|_{2,1} < \varepsilon$, reflecting the correspondence of hypotheses among models for the multiple virtual apertures. This correspondence requires a representation of the parameter of interest in a common reference frame, particularly for the case of apertures with different orientations, cf. Fig. 4, and where some hypotheses are not present in both field-of-views, cf.

Fig. 5. This aspect is revisited in the embodiments below.

To solve problem (19) there are available several group-sparse reconstruction algorithms analog to ones for standard sparsity. The best known in this context is the algorithm BOMP [44], which has the following strategy for group selection (or block of atoms) in the case of incoherent sensors [27]. For $L$ array apertures and an $N$-long grid of hypotheses for the reconstruction, BOMP first estimates the matched-filter response for each coherent array $l$, $MF^{(l)} := A^{(l)H} r_{it-1}^{(l)}$, where $it = 0,1, ...$ marks the iteration index, and $r_{it-1}^{(l)}$ is the residual signal for the $l$th virtual aperture. Initially, $r_0^{(l)} = y^{(l)}$. The combined matched-filter norm across apertures for each grid-point index i is then

$$\overline{MF}[i] := \left\| \left[ MF_i^{(1)}, ..., MF_i^{(L)} \right] \right\|_2 = \left( \sum_{l=1}^{L} \left| MF_i^{(l)} \right|^2 \right)^{\frac{1}{2}}, \qquad (22)$$

which combines information from the $L$ virtual apertures. The selection of the grid point $i^*$ (also called atom or group) that achieves the highest model matching across sensors is given by

$$i^* := \arg\max_i \overline{MF}[i]. \qquad (23)$$

Further steps of BOMP can be found in [27]. For the implementation of this exemplary algorithm, steps (22) and (23) are the only ones that combine information among apertures and also the relevant steps for the motivation of our design method. More importantly, we note that the matched-filter computations in (22) are the basis of other reconstruction algorithms such as Matching Pursuit (MP) [45] or iterative thresholding algorithm (ITA) [46]. In other words, the defining characteristic of the further (non-described) orthogonal projection of BOMP for the update of the residual is unnecessary for motivating the invention. The fundamental principle is the combined matched filter response, which is used in BOMP for atom selection (23), and is also used in algorithms such as MP or ITA for the gradient direction (cf. [47] for a unified description of these methods and efficient implementations).With these preliminaries, we are in a condition to describe the invention.

EMBODIMENT 1A: ANTENNA POSITION SYNTHESIS FOR MUTUALLY INCOHERENT APERTURES USING EFFECTIVE AMBIGUITY FUNCTION MOTIVATED BY BLOCK ORTHOGONAL MATCHING PURSUIT

Here we propose an ambiguity function for sidelobe level optimization motivated by the combined matched-filter response (22) as follows. We assume a signal for one target, $r_0^{(l)} = y^{(l)} = a^l(\xi')$ and define

$$AF_{\text{BOMP}}(\xi_i, \xi') := \overline{m}[i] = \left( \sum_{l=1}^{L} \left( AF^{(l)}(\xi_i, \xi') \right)^2 \right)^{\frac{1}{2}}.$$

This defines an effective combined AF in the grid $\{\xi_1, ..., \xi_N\}$ that is the average of the squares of the AF for the individual virtual apertures, where $AF^{(l)}(\xi,\xi') := |a^{(l)}(\xi)^H a^{(l)}(\xi')|$ and we recall that $a^{(l)}(\xi)$ is the $l$th virtual aperture signal model in (19). Note that while the AF and the notion of sidelobes are defined for a continuum of hypotheses, the matched-filter response in (22) is defined for a dictionary of hypotheses over a discrete grid $\{\xi_1, ..., \xi_N\}$. Since this grid is arbitrary, we make the natural extension outside the grid, which we term *effective ambiguity function for mutually incoherent apertures based on BOMP:*

$$AF_{\text{BOMP}}(\xi,\xi') := \left( \sum_{l=1}^{L} \left( AF^{(l)}(\xi,\xi') \right)^2 \right)^{\frac{1}{2}}. \tag{24}$$

The sidelobe level is independent of the grid and is defined as usual outside of a band defined by the caliber function $c(\xi')$ and inside the FoV $[\xi_{\min},\xi_{\max}]$,

$$f_{\text{SLL, BOMP}}([p_1,\dots,p_M];c) = \max_{\substack{\xi,\xi'\in[\xi_{\min},\xi_{\max}] \\ \|\xi-\xi'\|_p > c(\xi')}} AF_{\text{BOMP}}(\xi,\xi'), \tag{25}$$

where we emphasize the dependence on the antenna positions of the L' physical apertures,

$$[p_1,\dots,p_M] = \left[ p_1^{(1)},\dots,p_{m_1}^{(1)},\dots,p_1^{(L')},\dots,p_{m_{L'}}^{(L')} \right] \in \mathbb{R}^{3\times M},$$

With a total number of antennas among the apertures $m_1 + \dots + m_{L'} = M$. The interval of optimization for the search of the highest sidelobe is defined as the union of the intervals or FoVs over all the virtual apertures, i.e.,

$$[\xi_{\min},\xi_{\max}] = \bigcup_{l=1}^{L} \left[ \xi_{\min}^{(l)}, \xi_{\max}^{(l)} \right]. \tag{26}$$

We recall that for each virtual aperture, the FoV $\left[ \xi_{\min}^{(l)}, \xi_{\max}^{(l)} \right]$ results from the antenna patterns with orientation of the Tx and Rx elements of said virtual aperture, cf. (8).

Then, the optimal antenna positions are obtained as the solution to

$$\min_{[p_1,\dots,p_M]\in\mathbb{R}^{3\times M}} f_{\text{SLL, BOMP}}([p_1,\dots,p_M];c)$$
$$\text{s. t. } \left[ p_1^{(l)},\dots,p_{m_l}^{(l)} \right] \in \mathcal{S}^{(l)}, l \in \{1,\dots,L'\}. \tag{27}$$

Here

$$\mathcal{S}^{(l)} \subset \mathbb{R}^{3\times M}$$

represents the domain for the antenna positions [ $p_1^{(l)},\dots,p_{m_l}^{(l)}$ ] (e.g., Tx and Rx elements, $m_l = m_{Tx}^{(l)} + m_{Rx}^{(l)}$ ) of physical aperture $l \in \{1,\dots,L'\}$, including constraints on space available and on minimum separation to avoid electromagnetic coupling or due to antenna size. Fig. 4 illustrates the relevant parameters of the optimization: the number of physical apertures, L', the number of transmitters and receivers in each, $m_{Tx}^{(l)}, m_{Rx}^{(l)}$ , the space available in each physical aperture for the location of the antennas

$$\mathcal{S}^{(l)},$$

and the FoV of each virtual aperture [ $\xi_{\min}^{(l)}, \xi_{\max}^{(l)}$ ], which in the particular case of azimuth is given by [ $\phi_{\min}^{(l)}, \phi_{\max}^{(l)}$ ]. Fig. 6 shows an example of the effect of mutual sidelobe cancellation as a result of optimization (25). The optimization uses square antenna patterns over the FoV $\pm 60°$, and uses the far-field model. The configuration was pre-selected to be a central 3x4 MIMO aperture, and two "satellite" apertures on the sides with 4 Rx elements each, all linear along the y-axis and with the same perpendicular orientation. The maximum available size for each aperture was, from left to right, 4cm, 7cm, and 4 cm. Note that in general the number of mutually incoherent apertures results from all the combinations of Tx and Rx coherent sub-arrays, but in this example there are Tx elements only in the central aperture, while there are receivers in all three apertures. Consequently, the mutually incoherent virtual apertures are then defined by the Tx,Rx-MIMO subarrays (Center-Left), (Center-Center), and (Center-Right). The final sizes after the optimization of the subarrays is indicated in the legend: 1.9cm for Rx sub-array on the left, 3cm and 2.3cm for the Tx and Rx sub-arrays on the center, and 1.6cm for the Rx sub-array on the right. The plot shows the individual AF of the three mutually incoherent virtual apertures and the combined effective AF according to (24), whose SLL is optimized. As a result of the optimization we observe that the sidelobes of the individual AF are mutually compensated in the combined AF.

Fig. 3 shows schematically how the design of the front-end antennas of the mutually incoherent apertures fits into a processing chain, in principle for radar and radio-frequency applications, where digital beamforming is done with group-sparse reconstruction, cf. Section PRIOR ART ON PROCESSING WITH MUTUALLY INCOHERENT APERTURES. The optimal design, by inducing mutual sidelobe cancellation among matched filter responses of the individual virtual apertures, reduces ambiguity in the selection of the group of hypotheses that maximizes the combined response. We further note that the resolution cannot be improved with respect to a sufficiently dense array of maximum available coherent-aperture size, but a reduced number of antennas can be optimally located using more aggressively the available space of each aperture while ensuring that sidelobes are mutually cancelled despite the incoherent processing. In subsequent embodiments it is explained the optional possibilities of optimizing tapering weights and waveforms to further enhance the incoherent processing according to this principle.

Some noteworthy observations are the following:

i) The parameters $\xi$ and antenna positions are expressed in a common reference frame across all the apertures.

ii) We use the convention that if there exists $\xi_0 \notin \left[ \xi_{\min}^{(l)}, \xi_{\max}^{(l)} \right]$ for some virtual aperture $l$, then we set $a^{(l)}(\xi_0) = 0$. The latter implies that $AF^{(l)}(\xi_0, \xi) = 0$, thus eliminating the dependence of (24) on the antennas of virtual aperture $l$ in the directions given by all such $\xi_0$. (This convention can be alternatively derived from (8) and (26). Such a scenario is illustrated in Fig. 5 where the FoVs of the apertures do not overlap completely, e.g., in the near-field model, or the apertures have different orientations. This is an important aspect in the design of constellations of arrays presented in embodiment 4.

iii) We have made special emphasis on the distinction between physical aperture, where a set of coherent antennas are placed, and virtual physical aperture, that results from the combination of a coherent sub-array of Tx elements in one aperture and a coherent sub-array of Rx elements in the same or different aperture. This distinction is important for the implementation of the numerical optimization of the antenna positions but in the sequel, unless explicitly mentioned, we use for convenience *aperture* instead of *virtual aperture and the distinction must be discerned from context.*

EMBODIMENT 1B: TAPERING FOR MUTUALLY INCOHERENT APERTURES

The optimization of tapering weights can be *optionally* included in (27) as follows.

1. For each virtual aperture, the ambiguity function $AF^{(l)}(\xi, \xi')$ in (24) is replaced by (6) in terms of a non-negative vector of weights $w^{(l)}$ of dimension $m_{\mathrm{Virt}}^{(l)} = m_{Tx}^{(l)} \times m_{Rx}^{(l)}$, i.e.,

$$\widetilde{AF}^{(l)}(\xi, \xi') = \frac{\left| a^{(l)}(\xi)^H \left( w^{(l)} \odot a^{(l)}(\xi') \right) \right|}{\sum_i w_i^{(l)}}. \qquad (28)$$

2. The search of highest sidelobe is performed as in (25), for candidate weights

$$w^{Total} = [w^{(1)} \cdots w^{(L)}] \in [0,1]^{m_{\text{Virt}}},$$

where $m_{\text{Virt}} := m_{\text{Virt}}^{(1)} + \cdots + m_{\text{Virt}}^{(L)}$. That is, the search of highest sidelobe $f_{SLL,\ \text{BOMP}}([p_1, ...,p_M], w^{Total};\ c)$ is itself an optimization (maximization) problem for candidate tapering weights. The domain can be constrained to $[0,1]^{m_{\text{Virt}}}$ instead of $\mathbb{R}_{\geq 0}^{m_{\text{Virt}}}$ because each block of weights $w^{(l)}$ can be normalized by their sum, cf. (28).

3. The optimization in (27) includes explicitly the dependency of the metric $f_{SLL,\ \text{BOMP}}([p_1, ...,P_M], w^{Total};\ c)$ on the variable $w^{Total}$ (in addition to the antenna optimization or independently) over the desired domain. The domain of the weights can be a discrete library of candidate tapering weights or the continuous domain $[0,1]^{m_{\text{Virt}}}$. The highest sidelobe function $f_{SLL}$ is non-convex and therefore global or discrete optimization methods are necessary.

EMBODIMENT 1C: USING NEAR-FIELD MODEL FOR MUTUALLY INCOHERENT APERTURES

Near-field models can be used for embodiment 1A as follows. In the case of the near-field steering vector (16), there is a dependence on the range or distance to the objects of interest, and we can replace (24) by

$$AF_{\text{BOMP}}^{NF,\mathcal{R}}(\xi, \xi') = \sum_{R_j \in \mathcal{R}} AF_{\text{BOMP}}^{NF}(\xi, \xi'; R_j),$$

where $AF_{\text{BOMP}}^{NF}(\xi, \xi'; R_j)$ is as in (24) where each $AF^{(l)}(\xi, \xi') = AF_{\text{BOMP}}^{NF}(\xi, \xi'; R_j)$ is computed for the near-field model (16), and $\mathcal{R} := \{R_1, ..., R_J\}$ is the set of ranges of interest over which the AF is averaged. We note that for processing, the range can be obtained in a number of ways, e.g., using FMCW processing typical in automotive. On the other hand, for the purpose of design of the array, the range of the objects can be assumed in any interval of values of interest. Tapering weights can also be incorporated as in embodiment 1C.

The computational cost of the min-max optimization (27)-(25) ultimately depends on the complexity of evaluation of the observation model, which grows linearly with the number of virtual pairs of Tx and Rx elements and consequently with the number of incoherent apertures, and therefore the complexity is comparable to the case of coherent array design. We also observe that the observation model for far-field steering vector (11) is slightly faster to evaluate than the model of near-field steering vector (16). In the next embodiments 2 and 3, we propose alternative metrics that are also amenable for design of antenna array layouts of mutually incoherent apertures and optional tapering which are based on other principles for incoherent processing.

EMBODIMENT 2: ANTENNA POSITIONS SYNTHESIS FOR MUTUALLY INCOHERENT APERTURES USING A METRIC BASED ON TROPP'S EXACT RECOVERY CONDITION

In addition to the effective ambiguity function of embodiment 1 that enhances the performance of BOMP, here we formulate a metric based on sparse recovery in Compressed Sensing called Tropp's Exact Recovery condition (ERC) [48]. This condition is concerned with standard sparsity rather than group-sparsity but is noteworthy making the connection for the signal model of incoherent apertures.

The ERC is formulated for sparse signals with a specific support, rather than for all sparse signals simultaneously, which is sufficient for design because typically the models used for design assume a single target. Formally, this metric is defined, for a dictionary of hypothesis analogous to (21) as

$$ERC(\Lambda) := 1 - \max_{n \notin \Lambda} \| A_\Lambda^+ a_n \|_1, \tag{29}$$

where $A^+$ denotes the pseudoinverse, and $A_\Lambda$ indicates the submatrix of columns *of A* with indexes in the set A.

The ERC is desired to be low to reduce correlation between atoms in A and atoms not in A. That is, $\max_{n \notin \Lambda} \| A_\Lambda^+ a_n \|_1$ quantifies the ambiguity between hypotheses with indexes in A and out of A.

We formulate the ERC (29) for the signal model (19) in the case of $L = 2$ mutually incoherent apertures (since the general case of *L* apertures is analogous), and assume a 1-source model corresponding to exactly one hypothesis in the dictionary (akin to a scenario without off-grid error), i.e., A = {i},

$$A_{\Lambda=\{i\}} = \begin{bmatrix} A_i^{(1)} & 0_{m_1\times 1} \\ 0_{m_2\times 1} & A_i^{(2)} \end{bmatrix} = \begin{bmatrix} a^{(1)}(\xi_i) & 0_{m_1\times 1} \\ 0_{m_2\times 1} & a^{(2)}(\xi_i) \end{bmatrix} \in \mathbb{C}^{(m_1+m_2)\times 2}.$$

The block-diagonal structure accounts for the random phase between the two apertures, and we make the group-sparsity partition of columns wherein two columns belong to the same class if they correspond to the same hypothesis (that is, even though the ERC is defined for standard sparsity with 1-norm, we consider a partition over groups of columns corresponding to the same hypotheses). Without loss of generality, we assume that the array models are expressed in a common reference frame, so that corresponding hypotheses for each aperture have the same index.

Since the columns of $A_{\Lambda=\{i\}}$ are independent thanks to the block-diagonal structure, the pseudoinverse can be calculated as $A_i^+ = (A_i^H A_i)^{-1} A_i^H \in \mathbb{C}^{2\times 2}$ , and we obtain

$$A_i^+ = (A_i^H A_i)^{-1} A_i^H = \begin{bmatrix} \dfrac{A_i^{(1)^H}}{A_i^{(1)^H} A_i^{(1)}} & 0 \\ 0 & \dfrac{A_i^{(2)^H}}{A_i^{(2)^H} A_i^{(2)}} \end{bmatrix}.$$

In the cases where the signal model has a 2-norm equal to the number of samples or antennas, as in (13), then $A_i^{(1)^H} A_i^{(1)} = m_1$ and $A_i^{(2)^H} A_i^{(2)} = m_2$ , and we obtain

$$\max_{n\notin\{i\}} \left\| A_{\{i\}}^+ a_n \right\|_1 = \max_{n\notin\{i\}} \frac{1}{m_1} AF_1(\xi_i,\xi_n) + \frac{1}{m_2} AF_2(\xi_i,\xi_n).$$

We make two observations: i) the AFs are added with a relative importance factor proportional to $\frac{1}{m_l}$ , i.e., inversely with the number of samples (or antennas), and ii) the fact that the 1-norm is used in the definition of ERC (instead of the 2-norm as in the group-sparsity norm $\|x\|_{2,1}$), is responsible for the fact that the AFs are added linearly and not quadratically in contrast with the metric in embodiment 1.

In the limit when the spacing in the grid tends to 0, we obtain a notion of ambiguity function. This limit makes sense because we recall that the caliber in (5) prevents from computing cosine similarities at arbitrarily close parameters.) In the case of L apertures, the extension to a continuum of hypotheses yields our definition of *effective ambiguity function for mutually incoherent apertures based on ERC,*

$$AF_{\mathrm{ERC}}(\xi,\xi') := \sum_{l=1}^{L} \frac{1}{m_l} AF^{(l)}(\xi,\xi'). \tag{30}$$

With regards to observation ii) above, if, alternatively, the 2-norm is used, we obtain

$$AF_{\mathrm{ERC},2}(\xi,\xi') = \left( \sum_{l=1}^{L} \frac{1}{m_l^2} \left( AF^{(l)}(\xi_i,\xi') \right)^2 \right)^{\frac{1}{2}},$$

where the squares of the AFs are averaged weighted by $\frac{1}{m_l^2}$. The benefits of a particular choice of metric for design depends on its relationship with the processing method used. The metric of embodiment 1 has a direct relationship to atom/group selection in BOMP through the combined matched-filter response (in turn related to gradient steps of MP and ITA in their extension to incoherent apertures) but this embodiment suggests, among other things, that the atom/group selection criterion of BOMP can be modified to exploit other optimality conditions.

With this ambiguity function, the formulation of the optimization problem for the synthesis of antenna element positions is analogous to embodiment 1.

EMBODIMENT 3: ANTENNA POSITIONS SYNTHESIS FOR MUTUALLY INCOHERENT APERTURES USING METRIC BASED ON MAXIMUM LIKELIHOOD

The performance of maximum likelihood also provides a notion of ambiguity for model (19) in the case of one source (K = 1) with parameter vector $\xi' \in \mathbb{R}^q$. If the noise vectors $w^{(l)} \in \mathbb{C}^{m_l}$ in (19), for $l \in \{1, ..., L\}$, are independent complex multivariate Gaussians $\mathcal{N}(0, \sigma I_{m_l})$, then the probability of the measurements conditional to the parameters, using standard probability rules, is given by

$$-\log\left(p\left(y^{(1)}, ..., y^{(L)} \middle| \xi, s^{(1)}, ..., s^{(L)}\right)\right) = -\log\left(\prod_{l=1}^{L} p\left(y^{(l)} \middle| \xi, s^{(l)}\right)\right)$$

$$= \text{Constant} \times \sum_{l=1}^{L} \frac{1}{\sigma^2} \left\|y^{(l)} - a^{(l)}(\xi)s^{(l)}\right\|^2.$$

The concentrated log-likelihood for one snapshot (i.e., a single measurement per aperture), results from solving $s^{(l)}$ for each aperture $l$, as follows,

$$\min_{s^{(l)} \in \mathbb{C}} \left\|y^{(l)} - a^{(l)}(\xi)s^{(l)}\right\|^2.$$

The solution is $\left(s^{(l)}\right)^* = \frac{1}{\|a^{(l)}(\xi)\|^2} a^{(l)}(\xi)^H y^{(l)}$, and substituting above we obtain that the negative concentrated log-likelihood [49] is

$$L\left(y^{(1)}, ..., y^{(L)}; \xi\right) = \frac{1}{\sigma^2} \sum_{l=1}^{L} \left\|\left(I_{m_l} - P^{(l)}(\xi)\right)y^{(l)}\right\|^2,$$

where $I_{m_l}$ is the identity matrix of size $m_l$, and $P^{(l)}(\xi)$ is the orthogonal projection onto $a^{(l)}(\&)$,

$$P^{(l)}(\xi) := \frac{1}{\|a^{(l)}(\xi)\|^2} a^{(l)}(\xi)a^{(l)}(\xi)^H.$$

Next we explain the difference between parameter estimation and the metric optimized in this embodiment for design of incoherent apertures, which aims at increasing estimation performance. The estimation of the parameter $\xi$ corresponds to maximizing the likelihood, or, equivalently, minimizing the negative log-likelihood given the aperture measurements,

$$\xi^* := \arg\min_{\xi} L\big(y^{(1)}, \dots, y^{(L)}; \xi\big). \tag{31}$$

Accordingly, the notion of sidelobe refers to local minima for problem (31), which can cause ambiguous estimates in the presence of noise. The synthesis of antenna positions then requires reducing the effect of these local minima.

Consequently, in this embodiment we define the ambiguity between $\xi$ and $\xi'$, for a one-scatterer signal $y^{(l)} = a^{(l)}(\xi')$, as

$$AF_{\mathrm{ML}}(\xi, \xi') := -L\left(\big\{a^{(l)}(\xi')\big\}_{l=1}^{L}; \xi\right) = -\sum_{l=1}^{L} \frac{1}{\sigma^2} \left\| \big(I_{m_l} - P^{(l)}(\xi)\big) a^{l}(\xi') \right\|^2. \tag{32}$$

We refer to the latter as *effective ambiguity function for mutually incoherent apertures based on ML.*

As for previous ambiguity functions, the *peaks* of $AF_{\mathrm{ML}}(\xi,\xi')$ can be called sidelobes (which correspond to local minima of (31)) and the objective of the design is to minimize them, in particular minimizing the highest sidelobe, SLL, which is defined as in (25) in embodiment 1,

$$f_{\mathrm{SLL,\ ML}}\big([p_1, \dots, p_M]; c\big) := \max_{\substack{\xi, \xi' \in [\xi_{\min}, \xi_{\max}] \\ \|\xi - \xi'\|_p > c(\xi')}} AF_{\mathrm{ML}}(\xi, \xi'). \tag{33}$$

This metric quantifies the sidelobes for pairs of distinct hypotheses $\xi, \xi'$ for which the value of $L\left(\big\{a^{(l)}(\xi')\big\}_{l=1}^{L}; \xi\right)$ is the lowest, indicating that a potential value of the parameter $\xi'$ and the hypothesis $\xi$ can be confused. For this metric, the synthesis of antenna positions for each of the apertures can be defined as in (27). We emphasize that in all three previous embodiments the signal model for individual apertures $a^{(l)}(\xi)$ is general. In particular, far-field and near-field models can be used for the optimization as described in embodiment 1.

EMBODIMENT 4: DESIGN OF CONSTELLATION OF MUTUALLY INCOHERENT APERTURES WITH OVERLAPPING FOVS

Previous embodiments characterize the optimal array layouts of multiple apertures and optional optimal tapering in such a way that posterior processing is enhanced even when information is combined incoherently. The proposed design optimization has been motivated by group-sparse reconstruction with BOMP in embodiment 1, recovery conditions for Compressed Sensing in embodiment 2, and Maximum likelihood in embodiment 3. In this embodiment we describe the possibilities for synthesis of antenna array layouts when a set of incoherent apertures is optimized according to any of previous embodiments for any desired FoV, including 360° coverage and for short, medium and long range functionalities. Fig. 7 illustrates an instance of four mutually incoherent apertures in the front and on the rear of a vehicle, where the FoVs are represented with cones whose radii illustrate the detection range and overlapping areas are regions where optimization of antenna elements is coupled between apertures.

The application of embodiments 1-3 to the design of constellations of arrays includes, but is not limited to, the following steps:

1. Consider the locations available for the array apertures that are considered mutually incoherent. This provides the number of mutually incoherent virtual apertures $L$, while the domain for the antennas,

$$\mathcal{S}^{(l)},$$

always corresponds to the physical Tx and Rx in each physical aperture, $l \in \{1, \dots, L'\}$. The domains

$$\mathcal{S}^{(l)}$$

can be parametrized by curves or surfaces as discussed in Section PRELIMINARIES ON ANTENNA POSITION SYNTHESIS.

2. Select a number of Tx and Rx elements for each aperture. (If the number is variable, the proposed optimization has to be repeated for each considered case.)

3. Consider the radiation pattern of individual antennas in azimuth and elevation together with their orientations, summarized in the vector $APO(\xi;\mu)$. The orientations and further parameters of shape are collected in the vector $\mu$, which can be optionally considered an optimization vector variable. This determines the FoV of each virtual aperture (cf. (8)) in the given reference frame and therefore the total coverage obtained by all the mutually incoherent apertures, cf. (26).

4. Consider the desired operational range of each aperture and the most appropriate signal model for optimization depending on desired functionality, including far-field, or near-field signals (cf. embodiment 1C). This sets the signal model for each aperture $a^{(l)}(\xi)$. (Recall that that measurement models across apertures must be written in a common reference frame.)

5. Optionally consider as additional optimization variables the tapering weights, according to embodiment 1B.

6. Consider either of the effective combined ambiguity functions in embodiments 1-3, defined in (24), (30) or (32), which characterize the MLW and the sidelobes.

7. Choose a feasible caliber function $c(\xi)$ in the formulation of the metric (25) or in corresponding metrics in embodiments 2 and 3. Associated to the caliber, choose an appropriate scaling $\rho_\xi \in \mathbb{R}^q_{>0}$ for the weighted p-norm $\|\rho_\xi \odot (\xi - \xi')\|_p$ or entry-wise bounds to define a region of search of SLL, which indirectly poses a constraint on the multi-dimensional MLW (which in turn sets the minimum resolution).

8. Solve the non-concave maximization (25) to compute the SLL for each candidate antenna positions (and possibly tapering weights).

9. Optionally consider other related features like MLW, according to desired specifications and set appropriate importance to each term in the final cost function analog to (10).

10. Solve optimization over antenna positions as in (27).

11. Repeat process for other candidate number of Tx and Rx elements or other design choices to evaluate the trade-off between performance and cost.

12. Test the performance with synthetic signals using any desired estimation algorithm (e.g., BOMP, other CS algorithm, ML, etc.) to evaluate the resulting arrays for direction of arrival estimation.

In the next embodiment we present a method for waveform synthesis that is advantageous in certain scenarios using multiple incoherent apertures. We describe two embodiments: stepped-frequency waveform design for range estimation and design of slow-time sequences of pulses or chirps for Doppler estimation using mutually incoherent apertures.

EMBODIMENT 5A: STEPPED-FREQUENCY WAVEFORM DESIGN FOR MUTUALLY INCOHERENT APERTURES

Multiple incoherent apertures also present an opportunity for waveform design. The driving principle is parallel to the one in previous embodiments. Previously, a number of Tx, Rx antenna elements were optimally placed in multiple mutually incoherent apertures with efficient use of the available space thanks to mutual sidelobe cancellation between apertures. In this embodiment, the synthesis method concerns stepped-frequency pulses or stepped-frequency continuous-waves (SFCW) and enables a reduced number of steps/pulses in each coherent bandwidth, which reduces measurement time and allows to avoid occupied bands of the spectrum. The resulting sparse waveform synthesis can be employed for range (and possibly Doppler) estimation using efficient Compressed Sensing algorithms including BOMP, similarly to the beamforming process based on group-sparse filtering in Fig. 3. As reviewed in the corresponding section on prior art, this optimization has applications in ground penetrating radar, spectrum management, and SFCW for automotive radar.

Next we formulate the method for waveform synthesis analogously to embodiments 1-3. The signal model for the incoherent apertures is constructed following (19) where the signal for each coherent bandwidth $a^{(l)}(\xi)$ is given by (17) and the parameter is the range & = r (or delay) for a given target, i.e.,

$$a^{(l)}(r) = \left[ e^{i2k_1^{(l)}r}, \cdots, e^{i2k_m^{(l)}r} \right]^T,$$

where $k_1^{(l)}, \ldots, k_{m^{(l)}}^{(l)}$ are the wavenumbers $k_i = \frac{2\pi}{\lambda_i} = \frac{2\pi}{c_{\text{Light}}} f_i$, associated to the stepped-frequency waveform for a transmitter $Tx^{(l)}$ in aperture $l$. For simplicity, in this description we assume that all frequency steps (pulses or chirps) employ equal time but we are not particular about the value.

As before, the design according to this model presumes a processing mechanism that allows for incoherent combination of signals. That is, in the processing of signals when the angle of the targets is initially unknown (e.g., for range and/or Doppler estimation), using the proposed design of mutually incoherent apertures and waveform synthesis, the contribution to the phase of the frequency samples $a^{(l)}(r_k)$, $a^{(l')}(r_k)$ collected by any two pairs $(Tx^{(l)},Rx^{(l)})$, $(Tx^{(l')},Rx^{(l')})$ in different virtual apertures $l,l'$, due to the unknown angle of each target $k$ and the diversity of antenna positions, is factored out and regarded as random as part of $s_k^{(l)}$ and $s_k^{(l')}$, cf. (19). Therefore, the proposed design is compatible with the design setup that we advocate, and, by improving the associated ambiguity function for the mutually incoherent apertures, the performance is enhanced.

Fig. 8 illustrates a scenario of waveforms for Tx elements in mutually incoherent apertures. Each transmitter has available a bandwidth for selection of SFCWs. In each coherent bandwidth, a stepped frequency waveform or set of simultaneous frequencies can be selected, and the proposed embodiment describes the combined optimal selection across all mutually incoherent bandwidths.

The effective ambiguity function for the mutually incoherent apertures is constructed analogously to any of embodiments 1-3 using the AF for each coherent bandwidth (18), namely, $AF^{(l)}(\xi,\xi') = AF_{PC}(\Delta r)$, and the corresponding SSL is obtained as in (24)-(25),

$$f_{SLL}([k_1, \ldots, k_M]; c) = \max_{\Delta r \in [c, r_{\max} - r_{\min}]} \left( \sum_{l=1}^{L''} \left( AF_{PC}^{(l)}(\Delta r) \right)^2 \right)^{\frac{1}{2}}.$$

The optimal allocation or selection of carrier frequencies between apertures can be formulated, analogously to (27), as

$$\min_{[f_1, \ldots, f_M]} f_{SLL}([f_1, \ldots, f_M]; c)$$
$$\text{s.t. } [f_1^{(l)}, \ldots, f_{m_l}^{(l)}] \in \mathcal{F}^{(l)},$$

where $[f_1, \ldots, f_M] = \left[ f_1^{(1)}, \ldots, f_{m_1}^{(1)}, \ldots, f_1^{(L'')}, \ldots, f_{m_{L''}}^{(L'')} \right] \in \mathbb{R}_{>0}^M$ collects the frequency values across all mutually incoherent bandwidths that we wish to optimize, i.e., $M = m_1 + \ldots + m_{L''}$, and $\mathcal{F}^{(l)} \subset \mathbb{R}$ is the available spectrum for aperture $l$, depending on constraints such as occupied bandwidth, or minimum separation between frequencies. We emphasize that the synthesis of waveforms is optional and not required for the design of mutually incoherent array layouts.

EMBODIMENT 5B: SLOW-TIME WAVEFORM DESIGN FOR INCOHERENT PROCESSING

Transmission times in TDM MIMO can be designed across multiple incoherent slow-time sequences to optimize non-ambiguous Doppler bandwidth and resolution. In Doppler estimation for TDM MIMO, all transmitters can be considered as incoherent in cases including a) they are actually in incoherent apertures as described in previous embodiments, and b) cases where is desirable to decouple Doppler and DoA because there is an unknown phase difference between transmitters caused by the unknown target angle. In these cases, transmission times of the pulse/chirps for each transmitter can be optimized to achieve mutual sidelobe cancellation in Doppler domain under incoherency according to the following,

$$\min_{[t_1, \ldots, t_M]} f_{SLL}([t_1, \ldots, t_M]; c)$$

$$\text{s.t. } [t_1^{(l)}, \dots, t_{m_l}^{(l)}] \in \mathrm{T}^{(l)}, \forall l$$

$$[t^{(1)}, \dots, t^{(L'')}] \in \mathcal{S}_{\text{TDM}},$$

where $t_1, \dots, t_M] = [t_1^{(1)}, \dots, t_{m_1}^{(1)}, \dots, t_1^{(L'')}, \dots, t_{m_{L''}}^{(L'')}]$ collects the pulse transmission times that we wish to optimize across all transmitters, i.e., $M = m_1 + \dots + m_{L''}$ (for simplicity, we assume the duration of the pulses is identical),

$T^{(l)} \subset \mathbb{R}$ is the available time for the transmitter $l$, and $f_{SLL}([t_1, \dots, t_M]; c)$ is obtained as in (24)-(25) in terms of the ambiguity functions for Doppler estimation. Note that the signal model for Doppler estimation in terms of slow-time samples after preliminary range processing, at a given range frequency bin, is mathematically equivalent to the steering vector of the far-field model (11). As time orthogonality is necessary for TDM MIMO waveforms, no simultaneous chirps or pulses should be allowed between different transmitters, which is captured by the domain

$$\mathcal{S}_{\text{TDM}}.$$

This embodiment addresses the problem in TDM MIMO with several Tx elements where the long dwelling time between consecutive chirps transmitted by the same Tx element, reduces the maximum non-ambiguous Doppler frequency, thus making the system unsuitable for high velocities of the target. Using the above optimization of slow-time sequences over multiple transmissions, under incoherent apertures or if DoA is regarded as unknown, allows to cancel potential grating lobes and ambiguity. Fig. 9 illustrates the optimization of transmission times for non-simultaneous chirps for two generic mutually incoherent transmitters over their respective coherent processing intervals, and also depicts the associated data cube. The diagram shows an arbitrary sparse antenna configuration and an exemplary sequence of FMCW chirps in frequency-time axes, emphasizing the design of the transmission times. The corresponding designs are suitable for processing of incoherent signals using algorithms such as MP or ITA for incoherent aperturtes or BOMP which are reasonably efficient as pointed out in the preliminaries..

Other transmission parameters can be similarly designed because the effective ambiguity function of the combined apertures depends on them, and therefore the SLL can be evaluated for such transmission variables to also achieve mutual sidelobe cancellation and consequent non-ambiguous estimates while enhancing resolution at low hardware cost, as in the case of antenna array layouts in embodiments 1-4, or a shorter measurement acquisition time as in embodiment 5A, or non-ambiguous Doppler filtering with TDM MIMO with several transmitters even at high speed.

TABLE OF SELECTED NOTATIONS

| Notation | Definition |
|---|---|
| $\mathbb{C}^K, \mathbb{C}^{M \times K}$ | Vector space of complex $K$-dimensional vectors or $M \times K$ matrices. |
| $\mathbb{R}^q, \mathbb{R}^q_{\geq 0}, \mathbb{R}^q_{>0}$ | Euclidean space of dimension $q$, and octants with nonnegative and positive real numbers, respectively. |
| $\otimes, \odot$ | Kronecker product and entry-wise product, respectively. |
| $(.)^T, (.)^H$ | Transpose and conjugate transpose, respectively. |
| $I_m$ | Identity matrix of size $m$. |
| $\|\cdot\|_p$ | p-norm, for $p \in [1, \infty]$, defined for any vector $\xi \in \mathbb{R}^q$ or $\mathbb{C}^q$ as $$\|\xi\|_p := \left(\sum_i |\xi_i|^p\right)^{\frac{1}{p}}$$ |
| $\lambda_0, k_0$ | Wavelength and Wavenumber $k_0 = 2\pi/\lambda_0$. |
| $[p_1 \cdots p_M] \in \mathbb{R}^{3 \times M}$ | 3-dimensional coordinates for each of $M$ antenna elements. |

(continued)

| Notation | Definition |
|---|---|
| $\phi \in [-\frac{\pi}{2}, \frac{\pi}{2}]$ | Azimuth angle from boresight (x axis). |
| $\theta \in [0, \pi]$ | Elevation angle measured from polar axis (z axis). |
| $\hat{n} \in \mathbb{R}^3$ | $\hat{n} := [\cos(\phi)\sin(\theta), \sin(\phi)\sin(\theta), \cos(\theta)]$. Normal vector to the unit sphere at angles $\phi$, $\theta$, |
| $[u,v,w]$ | Components $[x,y,z]$ of $\hat{n}$. |
| $u = \sin(\phi)$ | Electronic angle when array is linear in the y axis (more properly, the v-component of $\hat{n}$) |
| $r > 0$ | Range, distance to target. |
| $\xi, \xi_k \in \mathbb{R}^q$ | Generic parameter vector, which can refer to the parameter vector of target $k$. |
| $a(\xi) \in \mathbb{C}^M$ | Generic signal (spatiotemporal sampling) model; can be particularized to Tx or Rx steering vectors $a_{Tx}(\xi)$, $a_{Rx}(\xi)$, or virtual $a_{Virt}(\xi)$ |
| $(.)^{FF}, (.)^{NF}$ | Scripts to represent far- and near-field, respectively. |
| $a_{Virt}(\xi)$ | Virtual steering vector, for far- or near-field in $\mathbb{C}^{m_{Tx} \times m_{Rx}}$ |
| $AP(\xi) \in \mathbb{R}^M$ | Antenna pattern, which is the power at $\xi$ relative to its orientation. |
| $APO(\xi; w_{APO}) \in \mathbb{R}^M$ | Antenna pattern, power at $\xi$ with respect to common reference frame depending on orientation of the antenna, where $w_{APO}$ includes parameters such its pointing direction and shape. |
| $(.)^{(l)}$ | Super-index ($l$) indicates $l$th aperture. It can refer to physical apertures $l \in \{1, ..., L'\}$, or virtual apertures $l \in \{1, ..., L\}$. In the case of several MIMO array apertures, the virtual apertures are combinations of Tx and Rx sets in each of the physical apertures. |
| $L, L', L''$ | Number of physical apertures, mutually incoherent virtual apertures, and number of mutually incoherent sets of stepped frequencies, respectively. |
| $m_{TX}, m_{Rx}$ | Number of Tx and Rx antenna elements in a MIMO coherent aperture |
| $m_l, M$ | Number of antennas, $m_l = m_{Tx}^{(l)} + m_{Rx}^{(l)}$ in physical aperture $l$ and in total $M = m_1 + \cdots m_{L'}$. |
| $m_{Virt}^{(l)}, m_{Virt}$ | Number of virtual pairs of Tx and Rx elements in a given aperture $m_{Virt}^{(l)} = m_{Tx}^{(l)} \times m_{Rx}^{(l)}$, and across all virtual apertures, $m_{Virt} := m_{Virt}^{(1)} + \cdots + m_{Virt}^{(L)}$. |
| $w, w^{(l)}, w^{Total}$ | Weights for tapering in three cases, generic, in virtual aperture $l$, and across all virtual apertures. |
| $[p_1^{(l)}, ..., p_{m_l}^{(l)}] \in \mathbb{R}^{3 \times m_l}$ | 3-dimensional coordinates for each of $m_l$ antenna elements in the $l$th physical aperture. |
| $\mathcal{S} \subset \mathbb{R}^{3 \times M}$ | Domain for antenna positions, including minimum separation. |

(continued)

| Notation | Definition |
|---|---|
| $\mathcal{S}^{(l)} \subset \mathbb{R}^{3 \times m_l}$ | Domain for antenna positions of $l$th aperture. Note that $\mathcal{S} = \bigcup_l \mathcal{S}^{(l)}$. |
| $y^{(l)} \in \mathbb{C}^{m_l}$ | Measurement signal at $l$th aperture. |
| $a^{(l)}(\xi) \in \mathbb{C}^{m_l}$ | Measurement model (e.g., far-steering vector $a^{FF}$, near-field steering vector $a^{NF}$, or other sampling vector). |
| $s_k^{(l)} \in \mathbb{C}$ | Complex amplitude of source $k$, accounting for path propagation loss, target RCS, processing gain, and random initial phase associated to coherent aperture $l$. |
| $A^{(l)} \in \mathbb{C}^{m_l \times N}$ | Matrix whose columns are the array model $a^{(l)}$ evaluated in points in a grid $A^{(l)} := [a^{(l)}(\xi_1) \cdots a^{(l)}(\xi_N)]$, where $\{\xi_1, \ldots, \xi_N\}$ is the set of hypotheses for $\xi$ (possibly ordered with lexicographic order). |
| $x^{(l)} \in \mathbb{C}^N$ | Sparse reconstruction coefficient vector over hypotheses $\{\xi_1, \ldots, \xi_N\}$. |
| $AF(\xi,\xi') > 0$ | Standard ambiguity function defined for a generic signal model $a(\xi)$ $$AF(\xi, \xi') := |a(\xi)^H a(\xi')|.$$ |
| $AF^{(l)}(\xi,\xi')$ | Ambiguity function associated to the $l$th aperture. |
| $AF_{BOMP}(\xi,\xi')$ | Combined ambiguity function over all apertures for BOMP. |
| $AF_{ERC}(\xi,\xi')$ | Combined ambiguity function over all apertures for ERC. |
| $AF_{ML}(\xi,\xi')$ | Combined ambiguity function over all apertures for maximum likelihood. |
| $c \equiv c(\xi)$ | Caliber function to determine neighborhood around mainlobe, beyond which the peaks of the ambiguity function are quantifies as sidelobes. |
| $f_{SLL}([p_1, \ldots, p_M]; c)$ | Cost function or metric that quantifies sidelobe level and related features of combined ambiguity functions (e.g., $f_{SLL, BOMP}$ for BOMP, and similarly for ERC, etc.) |

TABLE OF ABBREVIATIONS

| Notation | Definition |
|---|---|
| ADC | Analog to digital converter |
| AF | Ambiguity function |
| BOMP | Block Orthogonal Matching Pursuit |
| CPI | Coherent processing interval |
| CRB | Cramer-Rao Bound |
| DSP | Digital signal processing |
| ERC | Tropp's Exact Recovery Condition |
| FF | Far field |
| FMCW | Frequency-modulated continuous-wave |
| FoV | Field-of-view |
| ITA | Iterative Thresholding Algorithm |
| MIMO | Multiple Input Multiple Output |
| MLW | Mainlobe width |

(continued)

| Notation | Definition |
|---|---|
| ML | Maximum Likelihood |
| MP | Matching Pursuit |
| NF | Near field |
| SFCW | Stepped-frequency continuous-wave |
| SLL | Sidelobe level (height of maximum sidelobe) |
| TDM | Time domain multiplexing |
| WWB | Weiss-Weinstein Bound |

## BIBLIOGRAPHY

[1] G. S. A. a. D. R. F. a. F. C. Robey, "MIMO Radar Ambiguity Functions," IEEE Journal of Selected Topics in Signal Processing, vol. 1, no. 1, pp. 167-177, 2007.

[2] M. M. Khodier and C. G. Christodoulou, "Linear array geometry synthesis with minimum sidelobe level and null control using particle swarm optimization," IEEE Transactions on Antennas and Propagation, vol. 53, no. 8, pp. 2674-2679, 2005.

[3] C. M. Schmid, R. Feger, C. Wagner and A. Stelzer, "Design of a linear non-uniform antenna array for a 77-GHz MIMO FMCW radar," in IEEE International Microwave Workshop on Wireless Sensing, Local Positioning, and RFID, 2009.

[4] A. Recioui, "Sidelobe Level Reduction in Linear Array Pattern Synthesis Using Particle Swarm Optimization," Journal of Optimization Theory and Applications, vol. 153, no. 2, pp. 497-512, 2012.

[5] F. J. Harris, "On the use of windows for harmonic analysis with the discrete Fourier transform," Proceedings of the IEEE, vol. 66, no. 1, pp. 51-83, 1978.

[6] B. Friedlander, "Effects of Model Mismatch in MIMO Radar," IEEE Transactions on Signal Processing, vol. 60, no. 4, pp. 2071-2076, 2012.

[7] H. Messer, "Source localization performance and the array beam pattern, " Signal Processing, vol. 28, no. 2, pp. 163-181, 1992.

[8] G. Gottardi, L. Turrina, N. Anselmi, G. Oliveri and P. Rocca, "Sparse conformal array design for multiple patterns generation through Multi-Task Bayesian Compressive Sensing," in IEEE International Symposium on Antennas and Propagation USNCIURSI National Radio Science Meeting, 2017.

[9] Y. Hsu, K. T. Wong and L. Yeh, "Mismatch of Near-Field Bearing-Range Spatial Geometry in Source-Localization by a Uniform Linear Array," IEEE Transactions on Antennas and Propagation, vol. 59, no. 10, pp. 3658-3667, 2011.

[10] A. M. Elbir and T. E. Tuncer, "Direction finding and localization for far-field sources with near-field multipath reflections," in IEEE Signal Processing and Signal Processing Education Workshop, 2015.

[11] F. Engels, Multidimensional Frequency Estimation with Applications in Automotive Radar, Karlsruhe , 2016.

[12] A. C. Gurbuz, J. H. McClellan and W. R. Scott, "A Compressive Sensing Data Acquisition and imaging Method for Stepped Frequency GPRs," IEEE Transactions on Signal Processing, vol. 57, no. 7, pp. 2640-2650, 2009.

[13] T. Feuillen, A. Mallat and L. Vandendorpe, "Stepped frequency radar for automotive application: Range-Doppler coupling and distortions analysis," in IEEE Military Communications Conference (MILCOM), 2016.

[14] A. Al-Hourani, R. J. Evans, B. Moran, S. Kandeepan and U. Parampalli, "Efficient Range-Doppler Processing for Random Stepped Frequency Radar in Automotive Applications," in IEEE Vehicular Technology Conference (VTC Spring), 2017.

[15] J. H. G. Ender, "On Compressive Sensing applied to radar," Signal Processing, pp. 1402-1414, 2010.

[16] U. Oktel and R. L. Moses, "A Bayesian approach to array geometry," IEEE Transactions on Signal Processing, vol. 53, p. 1919-1923, 2005.

[17] F. Athley, "Optimization of element positions for direction finding with sparse arrays," in IEEE Signal Processing Workshop on Statistical Signal Processing, 516-519.

[18] D. T. Vu, A. Renaux, R. Boyer and S. Marcos, "Some results on the Weiss-Weinstein bound for conditional and unconditional signal models in array processing," Signal Processing, vol. 95, pp. 126-148, 2014.

[19] K. L. B. D. Khan, "Analysis of DOA estimation performance of sparse linear arrays using the Ziv-Zakai bound," in IEEE Radar Conference, 2010.

[20] S. Herbert, J. R. Hopgood and B. Mulgrew, "MMSE Adaptive Waveform Design for Active Sensing With Applications to MIMO Radar," IEEE Transactions on Signal Processing, vol. 66, no. 5, pp. 1361-1373, 2018.

[21] H. Unz, "Linear Arrays with arbitrarily distributed elements," IRE Trans. on Antennas and Propagation, vol. 8, no. 2, pp. 222-223, 1960.

[22] S. Kirkpatrick, C. D. Gelatt and M. P. Vecchi, "Optimization by Simulated Annealing," Science, vol. 220, no. 4598, pp. 671-680, 83.

[23] F. Engels, P. Heidenreich, A. M. Zoubir, F. K. Jondral and M. Wintermantel, "Advances in Automotive Radar: A framework on computationally efficient high-resolution frequency estimation," IEEE Signal Processing Magazine, pp. 36-46, 2017.

[24] J. H. G. Ender, "Autofocusing ISAR images via sparse representation," in European Conference on Synthetic Aperture Radar (EUSAR), 2012.

[25] B. Friedlander and T. Strohmer, "Bilinear compressed sensing for array self-calibration," in Asilomar Conference on Signals, Systems and Computers, 2014.

[26] C. R. Berger and J. M. F. Moura, "Noncoherent compressive sensing with application to distributed radar," in Annual Conference on Information Sciences and Systems, 2011.

[27] S. Brisken and J. Ender, "Block-sparse 3-D ISAR image reconstruction in a non-coherent multistatic scenario," in IEEE Radar Conference (RadarCon), 15.

[28] S. Subedi, Y. D. Zhang, M. G. Amin and B.Himed, "Group Sparsity Based Multi-Target Tracking in Passive Multi-Static Radar Systems Using Doppler-Only Measurements," IEEE Transactions on Signal Processing, pp. 3619-3634, 2016.

[29] M. WeiR, "Group Sparsity Techniques for Data Fusion of a passive MISO Radar Network," in 17th International Radar Symposium (IRS), 2016.

[30] M. A. Herman and T. Strohmer, "High-Resolution Radar via Compressed Sensing," IEEE Transactions on Signal Processing, pp. 2275-2284, 2009.

[31] O. Bar-Ilan and Y. C. Eldar, "Sub-Nyquist Radar via Doppler Focusing," IEEE Transactions on Signal Processing, vol. 62, no. 7, pp. 1796-1811, 2014.

[32] K. Gedalyahu, R. Tur and Y. C. Eldar, "Multichannel Sampling of Pulse Streams at the Rate of Innovation," IEEE Transactions on Signal Processing, vol. 59, no. 4, pp. 1491-1504, 2011.

[33] E. Baransky, G. Itzhak, N. Wagner, I. Shmuel, E. Shoshan and Y. C. Eldar, "Sub-Nyquist radar prototype: Hardware and algorithm," IEEE Transactions on Aerospace and Electronic Systems, pp. 809-822, 2014.

[34] P. Feng and Y. Bresler, "Spectrum-blind minimum-rate sampling and reconstruction of multiband signals," in IEEE International Conference on Acoustics, Speech, and Signal Processing, 1996.

[35] M. Mishali and Y. C. Eldar, "From Theory to Practice: Sub-Nyquist Sampling of Sparse Wideband Analog Signals," IEEE Journal of Selected Topics in Signal Processing, vol. 4, no. 2, pp. 375-391, 2010.

[36] G. MacKerron, B. Mulgrew, R. Cooper and S. Clark, "Spatially variant apodization for conventional and sparse spectral sensing systems," in Defence Applications of Signal Processing, 2011.

[37] C. Greiff, D. Mateos-Nunez, M. Gonzalez-Huici and S. Bruggenwirth, "Adaptive transmission for radar arrays using Weiss-Weinstein bounds," IET Radar, Sonar & Navigation, 2018 (Accepted).

[38] A. Aubry, A. D. Maio, M. Piezzo, M. M. Naghsh, M. Soltanalian and P. Stoica, "Cognitive radar waveform design for spectral coexistence in signal-dependent interference," in IEEE Radar Conference, 2014.

[39] K. Rambach and B. Yang, "Colocated MIMO radar: Cramer-Rao bound and optimal time division multiplexing for DOA estimation of moving targets," in IEEE International Conference on Acoustics, Speech and Signal Processing, 2013.

[40] K. Rambach and B. Yang, "Direction of Arrival estimation of two moving targets using a time division multiplexed colocated MIMO radar," in IEEE Radar Conference, 2014.

[41] C. Y. Chen and P. P. Vaidyanathan, "MIMO Radar Ambiguity Properties and Optimization Using Frequency-Hopping Waveforms," IEEE Trans. on Signal Processing, vol. 56, no. 12, pp. 5926-5936, 2008.

[42] S. Villeval, J. Tabrikian and I. Bilik, "Ambiguity function for sequential antenna selection," 2016.

[43] R. Wang, O. Renaudin, C. U. Bas, S. Sangodoyin and A. F. Molisch, "Antenna switching sequence design for channel sounding in a fast time-varying channel," 2018.

[44] Y. C. Eldar, P. Kuppinger and H. Bolcskei, "Block-Sparse Signals: Uncertainty Relations and Efficient Recovery," IEEE Transactions on Signal Processing, pp. 3042-3054, 2010.

[45] S. Mallat and Z. Zhang, "Matching pursuits with time-frequency dictionaries," IEEE Trans. Signal Processing, vol. 41, no. 12, pp. 3397-3415, 1993.

[46] I. Daubechies, M. Defrise and C. D. Mol, "An iterative thresholding algorithm for linear inverse problems with a sparsity constraint," IEEE Trans. Information Theory, vol. 52, no. 2, p. 489-509, 2006.

[47] T. Blumensath and M. E. Davies, "Gradient Pursuits," IEEE Transactions on Signal Processing, pp. 2370-2382, 2008.

[48] J. A. Tropp, "Just relax: convex programming methods for identifying sparse signals in noise," IEEE Transactions on Information Theory, vol. 52, no. 3, pp. 1030-1051, 2006.

[49] P. Stoica and K. C. Sharman, "Novel eigenanalysis method for direction estimation," in IEE Proceedings F-Radar and Signal Processing, 1990.

**Claims**

1.  A method for synthesis of antenna array layouts for radar and radio-frequency applications,

in which method said layouts are formed to comprise a given number of mutually incoherent apertures, wherein for given space specifications for each aperture, number of transmit and receive antennas and field of view(s) of the apertures, a design method is applied including:

- providing a metric with ambiguity functions based on a signal model that includes random initial phases between apertures, and
- selection of transmit and receive antenna locations according to said metric based on optimization of the ambiguity functions such that a sidelobe level and/or features dependent on the sidelobe level associated to said ambiguity functions over a number of dimensions corresponding to one or several parameters of interest, including azimuth and/or elevation, is minimized.

2. The method according to claim 1,
**characterized in that**
the metric provided corresponds to an ambiguity function based on atom/group selection of the group-sparse reconstruction method Block Orthogonal Matching Pursuit.

3. The method according to claim 1,
**characterized in that**
each ambiguity function for the mutually incoherent apertures is weighted by a number of transmit-receive pairs as derived from Tropp's Exact Recovery condition, or weighted by a maximum space associated to each aperture.

4. The method according to claim 1,
**characterized in that**
the metric provided corresponds to an ambiguity function based on maximum likelihood estimation.

5. The method according to either of claims 1-4,
**characterized in that**
a near-field model is used in the metric averaged over a desired set of ranges.

6. The method according to either of claims 1-5,
**characterized in that**
subsets of said mutually incoherent apertures are optimized for distinct field-of-views and ranges, to produce multifunctional arrays.

7. The method according to either of claims 1-5
**characterized in that**
the optimization considers, in addition to the antenna locations in each aperture, a set of tapering weights that are applied digitally in post-processing of signals.

8. A method for selection of waveform, including frequency selection of simultaneous transmitted frequencies or stepped-frequency waveforms and/or pulse transmission times, for transmitters in a set of mutually incoherent apertures for radar and radio-frequency applications,
wherein for given specifications of bandwidth of each aperture or constraints on transmission times in the case of TDM MIMO, and number of transmit elements, the method includes:

- providing a metric with ambiguity functions based on a signal model that includes random initial phases between apertures, and
- selection of frequencies and/or pulse transmission times according to said metric based on optimization of the ambiguity functions such that a sidelobe level and/or features dependent on the sidelobe level associated to said ambiguity functions over a number of dimensions corresponding to one or several parameters of interest, including range and/or Doppler, is minimized.

9. The method according to claim 8,
**characterized in that**
the metric provided corresponds to an ambiguity function based on atom/group selection of the group-sparse reconstruction method Block Orthogonal Matching Pursuit.

10. The method according to claim 8,

**characterized in that**
each ambiguity function for the mutually incoherent apertures is weighted by a number of transmit-receive pairs as derived from Tropp's Exact Recovery condition, or weighted by a maximum bandwidth, or coherent processing interval, associated to each aperture.

**11.** The method according to claim 8,
**characterized in that**
the metric provided corresponds to an ambiguity function based on maximum likelihood estimation.

**12.** A radar system comprising

- an antenna array with at least two mutually-incoherent apertures synthesized with the method according to one or several of claims 1 to 7, and
- an evaluation unit,

said evaluation unit being adapted to perform processing of measurement signals of the at least two apertures to detect objects in a scene.

**13.** The radar system according to claim 12,
**characterized in that**
said evaluation unit is adapted to perform said processing via group-sparse reconstruction.

**14.** The radar system according to claim 12 or 13,
**characterized in that**
the radar system comprises a waveform generator, said waveform generator being designed to generate a signal waveform for transmitters of said mutually incoherent apertures based on the method according to one or several of claims 8 to 11.

**Patentansprüche**

**1.** Verfahren zur Synthese von Antennenarray-Layouts für Radar- und Hochfrequenzanwendungen,

wobei die Layouts so gestaltet sind, dass sie eine gegebene Anzahl von zueinander inkohärenten Aperturen umfassen,
wobei für gegebene Raumanforderungen für jede Apertur, Anzahl der Sende- und Empfangsantennen und Sichtfeld(er) der Aperturen ein Entwurfsverfahren angewandt wird, das Folgendes umfasst:

- Bereitstellung einer Metrik mit Mehrdeutigkeitsfunktionen auf der Grundlage eines Signalmodells, das zufällige Anfangsphasen zwischen den Aperturen enthält, und
- Auswahl von Sende- und Empfangsantennenstandorten gemäß der genannten Metrik auf der Grundlage einer Optimierung der Mehrdeutigkeitsfunktionen, sodass ein Nebenkeulenpegel und/oder von dem Nebenkeulenpegel abhängige Merkmale, die den genannten Mehrdeutigkeitsfunktionen über eine Anzahl von Dimensionen zugeordnet sind, die einem oder mehreren interessierenden Parametern, einschließlich Azimut und/oder Elevation, entsprechen, minimiert wird.

**2.** Verfahren nach Anspruch 1,
**dadurch gekennzeichnet, dass**
die bereitgestellte Metrik einer Mehrdeutigkeitsfunktion entspricht, die auf der Atom- /Gruppenauswahl der gruppenarmen Rekonstruktionsmethode Block Orthogonal Matching Pursuit beruht.

**3.** Verfahren nach Anspruch 1,
**dadurch gekennzeichnet, dass**
jede Mehrdeutigkeitsfunktion für die zueinander inkohärenten Aperturen mit einer Anzahl von Sende-Empfangs-Paaren gewichtet wird, wie sie sich aus der Tropp'schen Bedingung für exakte Wiederherstellung ergibt, oder mit einem jeder Apertur zugeordneten maximalen Abstand gewichtet wird.

**4.** Verfahren nach Anspruch 1,

**dadurch gekennzeichnet, dass**
die angegebene Metrik einer Mehrdeutigkeitsfunktion entspricht, die auf einer Maximum-Likelihood-Schätzung beruht.

5. Verfahren nach einem der Ansprüche 1-4,
**dadurch gekennzeichnet, dass**
in der Metrik ein Nahfeldmodell verwendet wird, das über einen gewünschten Satz von Bereichen gemittelt ist.

6. Verfahren nach einem der Ansprüche 1-5,
**dadurch gekennzeichnet, dass**
Teilmengen der zueinander inkohärenten Aperturen für unterschiedliche Sichtfelder und Bereiche optimiert sind, um multifunktionale Arrays zu erzeugen.

7. Verfahren nach einem der Ansprüche 1-5,
**dadurch gekennzeichnet, dass**
die Optimierung zusätzlich zu den Antennenstandorten in jeder Apertur eine Reihe von Anpassungsgewichten berücksichtigt, die bei der Nachbearbeitung von Signalen digital angewendet werden.

8. Verfahren zur Auswahl der Wellenform, einschließlich der Frequenzauswahl von gleichzeitig gesendeten Frequenzen oder gestuften Frequenzwellenformen und/oder Impulsübertragungszeiten, für Sender in einem Satz von zueinander inkohärenten Aperturen für Radar- und Hochfrequenzanwendungen,
wobei das Verfahren für gegebene Vorgaben für die Bandbreite jeder Apertur oder Beschränkungen für die Übertragungszeiten im Falle von TDM-MIMO und die Anzahl der Sendeelemente umfasst:

- Bereitstellung einer Metrik mit Mehrdeutigkeitsfunktionen auf der Grundlage eines Signalmodells, das zufällige Anfangsphasen zwischen den Aperturen enthält, und
- Auswahl von Frequenzen und/oder Impulsübertragungszeiten gemäß der genannten Metrik auf der Grundlage einer Optimierung der Mehrdeutigkeitsfunktionen, sodass ein Nebenkeulenpegel und/oder von dem Nebenkeulenpegel abhängige Merkmale, die den genannten Mehrdeutigkeitsfunktionen über eine Anzahl von Dimensionen zugeordnet sind, die einem oder mehreren interessierenden Parametern, einschließlich Bereich und/oder Doppler, entsprechen, minimiert werden.

9. Verfahren nach Anspruch 8,
**dadurch gekennzeichnet, dass**
die bereitgestellte Metrik einer Mehrdeutigkeitsfunktion entspricht, die auf der Atom- /Gruppenauswahl der gruppenarmen Rekonstruktionsmethode Block Orthogonal Matching Pursuit beruht.

10. Verfahren nach Anspruch 8,
**dadurch gekennzeichnet, dass**
jede Mehrdeutigkeitsfunktion für die zueinander inkohärenten Aperturen mit einer Anzahl von Sende-Empfangs-Paaren gewichtet wird, wie sie aus der Bedingung der exakten Wiederherstellung nach Tropp abgeleitet ist, oder mit einer maximalen Bandbreite oder einem kohärenten Verarbeitungsintervall gewichtet wird, die bzw. das jeder Apertur zugeordnet ist.

11. Verfahren nach Anspruch 8,
**dadurch gekennzeichnet, dass**
die angegebene Metrik einer Mehrdeutigkeitsfunktion entspricht, die auf einer Maximum-Likelihood-Schätzung beruht.

12. Radarsystem, umfassend:

- eine Antennengruppe mit mindestens zwei zueinander inkohärenten Aperturen, die mit dem Verfahren nach einem oder mehreren der Ansprüche 1 bis 7 synthetisiert wurde, und
- eine Auswerteeinheit, wobei die Auswerteeinheit dafür ausgelegt ist, die Messsignale der mindestens zwei Aperturen zu verarbeiten, um Objekte in einer Szene zu erfassen.

13. Radarsystem nach Anspruch 12,
**dadurch gekennzeichnet, dass**

die Auswerteeinheit so ausgelegt ist, dass sie die Verarbeitung mittels gruppenarmer Rekonstruktion durchführt.

**14.** Radarsystem nach Anspruch 12 oder 13,
**dadurch gekennzeichnet, dass**
das Radarsystem einen Wellenformgenerator umfasst, wobei der Wellenformgenerator so ausgelegt ist, dass er eine Signalwellenform für Sender der zueinander inkohärenten Aperturen basierend auf dem Verfahren nach einem oder mehreren der Ansprüche 8 bis 11 erzeugt.

**Revendications**

**1.** Procédé de synthèse des agencements de réseaux d'antenne pour des applications radar et radiofréquence, dans lequel procédé lesdits agencements sont formés pour comprendre un nombre donné d'ouvertures mutuellement incohérentes, dans lequel pour les spécifications d'espace données pour chaque ouverture, un nombre d'antennes d'émission et de réception et de champ(s) de vision des ouvertures, un procédé de conception est appliqué, comprenant de :

- fournir une métrique avec des fonctions d'ambiguïté basées sur un modèle de signal qui inclut des phases initiales aléatoires entre les ouvertures, et
- sélectionner des emplacements d'antenne de transmission et de réception en fonction de ladite métrique basée sur l'optimisation des fonctions d'ambiguïté de sorte qu'un niveau de lobe secondaire et/ou des caractéristiques fonction du niveau de lobe secondaire associé à ladite fonction d'ambiguïté sur un certain nombre de dimensions correspondant à un ou plusieurs paramètres d'intérêt, y compris l'azimut et/ ou l'élévation, est minimisé.

**2.** Procédé selon la revendication 1, **caractérisé en ce que** la métrique fournie correspond à une fonction d'ambiguïté basée sur la sélection d'atome/groupe du procédé de reconstruction group-sparse à poursuite de correspondance orthogonale de bloc.

**3.** Procédé selon la revendication 1, **caractérisé en ce que** chaque fonction d'ambiguïté pour les ouvertures mutuellement incohérentes est pondérée par un certain nombre de paires d'émission-réception dérivées de la condition de récupération exacte de TROPP, ou pondérées par un espace maximal associé à chaque ouverture.

**4.** Procédé selon la revendication 1, **caractérisé en ce que** la métrique fournie correspond à une fonction d'ambiguïté basée sur une estimation de vraisemblance maximale.

**5.** Procédé selon l'une ou l'autre des revendications 1 à 4, **caractérisé en ce qu'**un modèle en champ proche est utilisé dans la métrique moyenne sur un ensemble de plages souhaité.

**6.** Procédé selon l'une ou l'autre des revendications 1 à 5, **caractérisé en ce que** les sous-ensembles desdites ouvertures mutuellement incohérentes sont optimisés pour des plages et des champs de vision distincts, afin de produire des agencements multifonctionnels.

**7.** Procédé selon l'une ou l'autre des revendications 1 à 5, **caractérisé en ce que** l'optimisation prend en compte, en plus des emplacements d'antenne dans chaque ouverture, un ensemble de poids effilés qui sont appliqués numériquement dans le post-traitement des signaux.

**8.** Procédé de sélection de forme d'onde, incluant la sélection de fréquences de fréquences transmises simultanées ou de formes d'ondes de fréquence par paliers et/ou de temps de transmission d'impulsions, pour des émetteurs dans un ensemble d'ouvertures mutuellement incohérentes pour des applications radar et de radiofréquence, dans lequel pour les spécifications données de bande passante de chaque ouverture ou contraintes sur les temps de transmission dans le cas de TDM MIMO et le nombre d'éléments de transmission, la procédé comprend de :

- fournir une métrique avec des fonctions d'ambiguïté basées sur un modèle de signal qui comprend des phases initiales aléatoires entre les ouvertures, et
- sélectionner des fréquences et/ou des temps de transmission d'impulsions selon ladite métrique sur la base de l'optimisation des fonctions d'ambiguïté de telle sorte qu'un niveau de lobe secondaire et/ou des caractéristiques fonction du niveau de lobe secondaire associé à ladite fonction d'ambiguïté sur un certain nombre de dimensions correspondant à un ou plusieurs paramètres d'intérêt, y compris la plage et/ou le doppler, soit minimisé.

9. Procédé selon la revendication 8, **caractérisée en ce que** la métrique fournie correspond à une fonction d'ambiguïté basée sur la sélection d'atome/groupe du procédé de reconstruction group-sparse à poursuite de correspondance orthogonale de bloc.

10. Procédé selon la revendication 8, **caractérisé en ce que** chaque fonction d'ambiguïté pour les ouvertures mutuellement incohérentes est pondérée par un certain nombre de paires d'émission-réception dérivées de la condition de récupération exacte de TROPP, ou pondérées par un espace maximal associé à chaque ouverture, ou pondérée par une bande passante maximale, ou un intervalle de traitement cohérent, associée à chaque ouverture.

11. Procédé selon la revendication 8, **caractérisé en ce que** la métrique fournie correspond à une fonction d'ambiguïté basée sur une estimation de vraisemblance maximale.

12. Système radar comprenant

   - un agencement d'antenne avec au moins deux ouvertures mutuellement incohérentes synthétisées avec le procédé selon une ou plusieurs des revendications 1 à 7, et
   - une unité d'évaluation, ladite unité d'évaluation étant adaptée pour effectuer un traitement des signaux de mesure des au moins deux ouvertures afin de détecter des objets dans une scène.

13. Système radar selon la revendication 12, caractérisé ladite unité d'évaluation est adaptée pour effectuer ledit traitement via une reconstruction group-sparse.

14. Système radar selon la revendication 12 ou 13, **caractérisé en ce que** le système radar comprend un générateur de forme d'onde, ledit générateur de forme d'onde étant conçu pour générer une forme d'onde de signal pour les émetteurs desdites ouvertures mutuellement incohérentes sur la base du procédé selon une ou plusieurs des revendications 8 à 11.

Fig. 1

Fig. 2

Fig. 3

EP 3 690 483 B1

$m_{Tx}^{(1)}$
$m_{Rx}^{(1)}$ $\mathcal{S}_1$

$m_{Tx}^{(2)}$
$m_{Rx}^{(2)}$ $\mathcal{S}_2$

$m_{Tx}^{(3)}$
$m_{Rx}^{(3)}$ $\mathcal{S}_3$

$[\phi_{\min}^{(1)}, \phi_{\max}^{(1)}]$

$\phi$ $[\phi_{\min}^{(2)}, \phi_{\max}^{(2)}]$

$[\phi_{\min}^{(3)}, \phi_{\max}^{(3)}]$

Fig. 4

Fig. 7

Fig. 5A

Fig. 5B

AF of combined and individual coherent apertures

......... Virt. aperture: Center (3cm) - Left (1.9 cm)
– – – Virt. aperture: Center - Center
–·–·– Virt. aperture: Center - Right (1.6 cm)
——— Combined AF
——— Caliber and FoV

$\Delta u$

$AF(\Delta u)$ [dB]

Fig. 6

EP 3 690 483 B1

## Optimization of mutually incoherent frequency/bandwidth apertures

Fig. 8

## Optimization of mutually incoherent slow-time apertures in TDM MIMO

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105426578 B
- US 3877033 A
- EP 2949002 A1
- WO 2014114993 A1
- WO 2009140998 A1
- EP 18179827 A
- US 7142153 B2
- US 9448302 B2

**Non-patent literature cited in the description**

- **E. TOHIDI et al.** Sparse Antenna and Pulse Placement for Colocated MIMO Radar. *IEEE Transactions on Signal Processing,* vol. 67 (3), 579-593
- **G. S. A. A. D. R. F. A. F. C. ROBEY.** MIMO Radar Ambiguity Functions. *IEEE Journal of Selected Topics in Signal Processing,* 2007, vol. 1 (1), 167-177
- **M. M. KHODIER ; C. G. CHRISTODOULOU.** Linear array geometry synthesis with minimum sidelobe level and null control using particle swarm optimization. *IEEE Transactions on Antennas and Propagation,* 2005, vol. 53 (8), 2674-2679
- **C. M. SCHMID ; R. FEGER ; C. WAGNER ; A. STELZER.** Design of a linear non-uniform antenna array for a 77-GHz MIMO FMCW radar. *IEEE International Microwave Workshop on Wireless Sensing, Local Positioning, and RFID,* 2009
- **A. RECIOUI.** Sidelobe Level Reduction in Linear Array Pattern Synthesis Using Particle Swarm Optimization. *Journal of Optimization Theory and Applications,* 2012, vol. 153 (2), 497-512
- **F. J. HARRIS.** On the use of windows for harmonic analysis with the discrete Fourier transform. *Proceedings of the IEEE,* 1978, vol. 66 (1), 51-83
- **B. FRIEDLANDER.** Effects of Model Mismatch in MIMO Radar. *IEEE Transactions on Signal Processing,* 2012, vol. 60 (4), 2071-2076
- **H. MESSER.** Source localization performance and the array beam pattern. *Signal Processing,* 1992, vol. 28 (2), 163-181
- **G. GOTTARDI ; L. TURRINA ; N. ANSELMI ; G. OLIVERI ; P. ROCCA.** Sparse conformal array design for multiple patterns generation through Multi-Task Bayesian Compressive Sensing. *IEEE International Symposium on Antennas and Propagation USNCIURSI National Radio Science Meeting,* 2017
- **Y. HSU ; K. T. WONG ; L. YEH.** Mismatch of Near-Field Bearing-Range Spatial Geometry in Source-Localization by a Uniform Linear Array. *IEEE Transactions on Antennas and Propagation,* 2011, vol. 59 (10), 3658-3667
- **A. M. ELBIR ; T. E. TUNCER.** Direction finding and localization for far-field sources with near-field multipath reflections. *IEEE Signal Processing and Signal Processing Education Workshop,* 2015
- **F. ENGELS.** Multidimensional Frequency Estimation with Applications in Automotive Radar. *Karlsruhe,* 2016
- **A. C. GURBUZ ; J. H. MCCLELLAN ; W. R. SCOTT.** A Compressive Sensing Data Acquisition and imaging Method for Stepped Frequency GPRs. *IEEE Transactions on Signal Processing,* 2009, vol. 57 (7), 2640-2650
- **T. FEUILLEN ; A. MALLAT ; L. VANDENDORPE.** Stepped frequency radar for automotive application: Range-Doppler coupling and distortions analysis. *IEEE Military Communications Conference (MILCOM),* 2016
- **A. AL-HOURANI ; R. J. EVANS ; B. MORAN ; S. KANDEEPAN ; U. PARAMPALLI.** Efficient Range-Doppler Processing for Random Stepped Frequency Radar in Automotive Applications. *IEEE Vehicular Technology Conference (VTC Spring),* 2017
- **J. H. G. ENDER.** On Compressive Sensing applied to radar. *Signal Processing,* 2010, 1402-1414
- **U. OKTEL ; R. L. MOSES.** A Bayesian approach to array geometry. *IEEE Transactions on Signal Processing,* 2005, vol. 53, 1919-1923
- **F. ATHLEY.** Optimization of element positions for direction finding with sparse arrays. *IEEE Signal Processing Workshop on Statistical Signal Processing,* 516-519

- **D. T. VU ; A. RENAUX ; R. BOYER ; S. MARCOS.** Some results on the Weiss-Weinstein bound for conditional and unconditional signal models in array processing. *Signal Processing,* 2014, vol. 95, 126-148
- **K. L. B. D. KHAN.** Analysis of DOA estimation performance of sparse linear arrays using the Ziv-Zakai bound. *IEEE Radar Conference,* 2010
- **S. HERBERT ; J. R. HOPGOOD ; B. MULGREW.** MMSE Adaptive Waveform Design for Active Sensing With Applications to MIMO Radar. *IEEE Transactions on Signal Processing,* 2018, vol. 66 (5), 1361-1373
- **H. UNZ.** Linear Arrays with arbitrarily distributed elements. *IRE Trans. on Antennas and Propagation,* 1960, vol. 8 (2), 222-223
- **S. KIRKPATRICK ; C. D. GELATT ; M. P. VECCHI.** Optimization by Simulated Annealing. *Science,* vol. 220 (4598), 671-680
- **F. ENGELS ; P. HEIDENREICH ; A. M. ZOUBIR ; F. K. JONDRAL ; M. WINTERMANTEL.** Advances in Automotive Radar: A framework on computationally efficient high-resolution frequency estimation. *IEEE Signal Processing Magazine,* 2017, 36-46
- **J. H. G. ENDER.** Autofocusing ISAR images via sparse representation. *European Conference on Synthetic Aperture Radar (EUSAR),* 2012
- **B. FRIEDLANDER ; T. STROHMER.** Bilinear compressed sensing for array self-calibration. *Asilomar Conference on Signals, Systems and Computers,* 2014
- **C. R. BERGER ; J. M. F. MOURA.** Noncoherent compressive sensing with application to distributed radar. *Annual Conference on Information Sciences and Systems,* 2011
- **S. BRISKEN ; J. ENDER.** Block-sparse 3-D ISAR image reconstruction in a non-coherent multistatic scenario. *IEEE Radar Conference (RadarCon),* vol. 15
- **S. SUBEDI ; Y. D. ZHANG ; M. G. AMIN ; B.HIMED.** Group Sparsity Based Multi-Target Tracking in Passive Multi-Static Radar Systems Using Doppler-Only Measurements. *IEEE Transactions on Signal Processing,* 2016, 3619-3634
- **M. WEIR.** Group Sparsity Techniques for Data Fusion of a passive MISO Radar Network. *17th International Radar Symposium (IRS),* 2016
- **M. A. HERMAN ; T. STROHMER.** High-Resolution Radar via Compressed Sensing. *IEEE Transactions on Signal Processing,* 2009, 2275-2284
- **O. BAR-ILAN ; Y. C. ELDAR.** Sub-Nyquist Radar via Doppler Focusing. *IEEE Transactions on Signal Processing,* 2014, vol. 62 (7), 1796-1811
- **K. GEDALYAHU ; R. TUR ; Y. C. ELDAR.** Multichannel Sampling of Pulse Streams at the Rate of Innovation. *IEEE Transactions on Signal Processing,* 2011, vol. 59 (4), 1491-1504
- **E. BARANSKY ; G. ITZHAK ; N. WAGNER ; I. SHMUEL ; E. SHOSHAN ; Y. C. ELDAR.** Sub-Nyquist radar prototype: Hardware and algorithm. *IEEE Transactions on Aerospace and Electronic Systems,* 2014, 809-822
- **P. FENG ; Y. BRESLER.** Spectrum-blind minimum-rate sampling and reconstruction of multiband signals. *IEEE International Conference on Acoustics, Speech, and Signal Processing,* 1996
- **M. MISHALI ; Y. C. ELDAR.** From Theory to Practice: Sub-Nyquist Sampling of Sparse Wideband Analog Signals. *IEEE Journal of Selected Topics in Signal Processing,* 2010, vol. 4 (2), 375-391
- **G. MACKERRON ; B. MULGREW ; R. COOPER ; S. CLARK.** Spatially variant apodization for conventional and sparse spectral sensing systems. *Defence Applications of Signal Processing,* 2011
- **C. GREIFF ; D. MATEOS-NUNEZ ; M. GONZALEZ-HUICI ; S. BRUGGENWIRTH.** Adaptive transmission for radar arrays using Weiss-Weinstein bounds. *IET Radar, Sonar & Navigation,* 2018
- **A. AUBRY ; A. D. MAIO ; M. PIEZZO ; M. M. NAGHSH ; M. SOLTANALIAN ; P. STOICA.** Cognitive radar waveform design for spectral coexistence in signal-dependent interference. *IEEE Radar Conference,* 2014
- **K. RAMBACH ; B. YANG.** Colocated MIMO radar: Cramer-Rao bound and optimal time division multiplexing for DOA estimation of moving targets. *IEEE International Conference on Acoustics, Speech and Signal Processing,* 2013
- **K. RAMBACH ; B. YANG.** Direction of Arrival estimation of two moving targets using a time division multiplexed colocated MIMO radar. *IEEE Radar Conference,* 2014
- **C. Y. CHEN ; P. P. VAIDYANATHAN.** MIMO Radar Ambiguity Properties and Optimization Using Frequency-Hopping Waveforms. *IEEE Trans. on Signal Processing,* 2008, vol. 56 (12), 5926-5936
- **S. VILLEVAL ; J. TABRIKIAN ; I. BILIK.** *Ambiguity function for sequential antenna selection,* 2016
- **R. WANG ; O. RENAUDIN ; C. U. BAS ; S. SANGODOYIN ; A. F. MOLISCH.** *Antenna switching sequence design for channel sounding in a fast time-varying channel,* 2018
- **Y. C. ELDAR ; P. KUPPINGER ; H. BOLCSKEI.** Block-Sparse Signals: Uncertainty Relations and Efficient Recovery. *IEEE Transactions on Signal Processing,* 2010, 3042-3054
- **S. MALLAT ; Z. ZHANG.** Matching pursuits with time-frequency dictionaries. *IEEE Trans. Signal Processing,* 1993, vol. 41 (12), 3397-3415
- **I. DAUBECHIES ; M. DEFRISE ; C. D. MOL.** An iterative thresholding algorithm for linear inverse problems with a sparsity constraint. *IEEE Trans. Information Theory,* 2006, vol. 52 (2), 489-509

- **T. BLUMENSATH ; M. E. DAVIES.** Gradient Pursuits. *IEEE Transactions on Signal Processing,* 2008, 2370-2382
- **J. A. TROPP.** Just relax: convex programming methods for identifying sparse signals in noise. *IEEE Transactions on Information Theory,* 2006, vol. 52 (3), 1030-1051

- **P. STOICA ; K. C. SHARMAN.** Novel eigenanalysis method for direction estimation. *IEE Proceedings F-Radar and Signal Processing,* 1990